(19) Europäisches Patentamt
European Patent Office
Office européen des brevets

(11) **EP 4 319 385 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
***H04W 72/04*** *(2023.01)*

(21) Application number: **21943570.8**

(52) Cooperative Patent Classification (CPC):
**H04W 72/04**

(22) Date of filing: **04.06.2021**

(86) International application number:
**PCT/CN2021/098281**

(87) International publication number:
**WO 2022/252207 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• YU, Haifeng
  Shenzhen, Guangdong 518129 (CN)
• LI, Bingzhao
  Shenzhen, Guangdong 518129 (CN)
• CAO, Zhenzhen
  Shenzhen, Guangdong 518129 (CN)

(74) Representative: **Grünecker Patent- und
Rechtsanwälte
PartG mbB
Leopoldstraße 4
80802 München (DE)**

(54) **COMMUNICATION METHOD AND APPARATUS**

(57) This application provides a communication method and apparatus. The method includes: receiving first indication information, where the first indication information corresponds to a first service group, the first service group includes at least one first service, and the first service includes a broadcast service and/or a multicast service; and determining, based on the first indication information, whether to monitor a physical downlink control channel PDCCH corresponding to the first service group. According to this method, a terminal device determines, in advance based on the first indication information provided by a network device, whether to monitor the PDCCH to receive a data packet corresponding to the broadcast and/or multicast service, to avoid unnecessary PDCCH monitoring by the terminal device, thereby reducing power consumption of the terminal device.

FIG. 4

**Description**

**TECHNICAL FIELD**

This application relates to the field of communication technologies, and specifically, to a communication method and apparatus.

**BACKGROUND**

Multicast broadcast services (multicast broadcast services, MBSs) are applied to many scenarios, for example, application scenarios with 5G including vehicle to everything (vehicle to everything, V2X) and Internet of Things (internet of things, IoT). A network device sends or transmits multicast data to a terminal device in a unicast, multicast, or broadcast manner. A unicast transmission technology, which is also referred to as a unicast transmission manner, refers to a technology in which only one terminal device receives data when a network device sends the data, that is, point-to-point transmission. A multicast transmission technology, which is also referred to as a multicast transmission manner, refers to a technology in which a plurality of terminal devices receive data simultaneously when a network device sends the data, that is, point-to-multipoint transmission. A broadcast transmission technology refers to a technology in which all terminal devices served by a network device receive data when the network device sends the data.

Currently, there is a power saving mechanism for receiving a unicast service by a terminal device. However, when the terminal device receives a broadcast and/or multicast service, there is no corresponding power saving mechanism. Therefore, how to develop a power saving mechanism for receiving a broadcast and/or multicast service by the terminal device is an urgent problem to be resolved.

**SUMMARY**

This application provides a communication method and apparatus, to reduce power consumption caused when a terminal device receives a broadcast and/or multicast service.

According to a first aspect, a communication method is provided, and may be applied to a terminal device or may be applied to a chip inside the terminal device. The method includes: receiving first indication information, where the first indication information corresponds to a first service group, the first service group includes at least one first service, and the first service includes a broadcast service and/or a multicast service; and determining, based on the first indication information, whether to monitor a physical downlink control channel (physical downlink control channel, PDCCH) corresponding to the first service group.

In this way, the terminal device determines, by receiving the indication information that is sent by a network device and that is for the broadcast and/or multicast service, whether to monitor the PDCCH corresponding to the broadcast and/or multicast service. Therefore, unnecessary PDCCH monitoring by the terminal device can be reduced, and power consumption of the terminal device can be reduced.

In a possible implementation, the method further includes: receiving first configuration information, where the first configuration information includes a first information element, the first information element indicates a time domain position and/or a frequency domain position for monitoring a first message, and the first message includes the first indication information; and receiving the first message based on the first configuration information.

In a possible implementation, the method further includes: receiving first configuration information, where the first configuration information includes a second information element, and the second information element indicates a position of the first indication information in the first message.

In a possible implementation, the time domain position includes a start time domain position and a monitoring time period, and the monitoring time period indicates a time length for monitoring the first message; or the time domain position includes a start time domain position and an end time domain position; and the first information element includes a first offset, and the first offset is used to determine the start time domain position for monitoring.

In a possible implementation, the first offset may be in a unit of a time unit, and the time unit may be a subframe, a slot, a symbol, or a time unit of another granularity.

In a possible implementation, a value of the first offset may be a natural number. For example, the first offset is 0, 1, 3, 5, 10, or another value.

In a possible implementation, the first information element further includes a monitoring time period corresponding to the first service group, and the second information element includes a size of the first message and first position information, or the second information element includes a start position of the first message and second position information.

In a possible implementation, the first indication information is included in a first message, the first message further includes second indication information, the second indication information corresponds to a second service group, the second service group includes at least one second service, the second service includes at least one of a broadcast service, a multicast service, or a unicast service, and the second indication information is used to determine whether to monitor a PDCCH corresponding to the second service group.

In a possible implementation, second configuration information is received, and an occasion for monitoring the second indication information is determined based on the second configuration information. The second configuration information includes a third information element and a fourth information element, and the third information element includes a second offset.

In a possible implementation, the terminal device determines, based on the first offset and the second offset, to monitor the first message at a same position, where the first message includes the first indication information and the second indication information.

In a possible implementation, that the terminal device determines, based on the first offset and the second offset, to monitor the first message at a same position includes: When a start position of a discontinuous reception-on (discontinuous reception-on, DRX-on) state corresponding to the first service group is the same as a start position of a DRX-on state corresponding to the second service group, the first offset corresponding to the first service group is the same as the second offset corresponding to the second service group.

In a possible implementation, that the terminal device determines, based on the first offset and the second offset, to monitor the first message at a same position includes: When a start position of a DRX-on state corresponding to the first service group is different from a start position of a DRX-on state corresponding to the second service group, the first offset corresponding to the first service group is different from the second offset corresponding to the second service group.

In this way, values of the first offset corresponding to the first service group and the second offset corresponding to the second service group are set, to implement the first start position corresponding to the first service group to be the same as the second start position corresponding to the second service group, so that the terminal device can monitor, at the same position, the first message that includes the first indication information and the second indication information. In this way, power consumption caused by unnecessary PDCCH monitoring by the terminal device can be reduced, and a problem that the terminal device misses necessary PDCCH monitoring due to different start positions for monitoring the first message can be alleviated.

In a possible implementation, the first message includes physical downlink control information DCI, a media access control control element MAC CE, or a radio resource control RRC message.

In a possible implementation, a PDCCH is monitored based on discontinuous reception DRX configuration corresponding to the first service group, where the DRX configuration includes at least one of the following: a time length of a first downlink hybrid automatic repeat request round trip time timer, a time length of a first downlink DRX retransmission timer, a first on-duration timer, a first inactivity timer, a first slot offset, and a first DRX cycle start offset.

According to a second aspect, a communication method is provided, and may be applied to a network device or may be applied to a chip inside the network device. The method includes: obtaining first indication information, where the first indication information corresponds to a first service group, the first service group includes at least one first service, and the first service includes a broadcast service and/or a multicast service; and sending the first indication information.

In a possible implementation, the method further includes: sending first configuration information, where the first configuration information includes a first information element, the first information element indicates a time domain position and/or a frequency domain position at which a terminal device monitors a first message, and the first message includes the first indication information; and sending the first message based on the first configuration information.

In a possible implementation, the method further includes: sending the first configuration information, where the first configuration information includes a second information element, and the second information element indicates a position of the first indication information in the first message.

In a possible implementation, the time domain position includes a start time domain position and a monitoring time period, and the monitoring time period indicates a time length for monitoring the first message; or the time domain position includes a start time domain position and an end time domain position; and the first information element includes a first offset, and the first offset is used to determine the start time domain position for monitoring.

In a possible implementation, the first offset may be in a unit of a time unit, and the time unit may be a subframe, a slot, a symbol, or a time unit of another granularity.

In a possible implementation, a value of the first offset may be a natural number. For example, the first offset is 0, 1, 3, or another value.

In a possible implementation, the first information element further includes a monitoring time period corresponding to the first service group, and the second information element includes a size of the first message and first position information, or the second information element includes a start position of the first message and second position information.

In a possible implementation, the first indication information is included in a first message, the first message further includes second indication information, the second indication information corresponds to a second service group, the second service group includes at least one second service, the second service includes at least one of a broadcast and/or multicast service, or a unicast service, and the second indication information is used to determine whether to monitor a PDCCH corresponding to the second service group.

In a possible implementation, second configuration information is sent, and an occasion for monitoring the second indication information is determined based on the second configuration information. The second configuration information includes a third information element and a fourth information element, and the third information element includes a second offset.

In a possible implementation, the first message includes the first indication information and the second indication information, and the network device determines the first offset and the second offset, so that the terminal device determines, based on the first offset and the second offset, to monitor the first message at a same position.

In a possible implementation, a value of the first offset corresponding to the first service group is the same as a value of the second offset corresponding to the second service group.

In this way, when the network device determines that a start position of a DRX-on state corresponding to the first service group is the same as a start position of a DRX-on state corresponding to the second service group, the network device may set values of the first offset and the second offset to be the same, so that the terminal device can determine, based on the first offset, the second offset, and the start positions of the DRX-on states corresponding to the two service groups, to monitor the first message at the same position. The first message includes the first indication information and the second indication information.

In a possible implementation, a value of the first offset corresponding to the first service group is different from a value of the second offset corresponding to the second service group.

In this way, when the network device determines that a start position of a DRX-on state corresponding to the first service group is different from a start position of a DRX-on state corresponding to the second service group, the network device may set values of the first offset and the second offset to be different, so that the terminal device can determine, based on the first offset, the second offset, and the start positions of the DRX-on states corresponding to the two service groups, to monitor the first message at a same position. The first message includes the first indication information and the second indication information.

In a possible implementation, the first message includes physical downlink control information DCI, a media access control control element MAC CE, or a radio resource control RRC message.

In a possible implementation, discontinuous reception DRX configuration is sent, where the DRX configuration includes at least one of the following: a time length of a first downlink hybrid automatic repeat request round trip time timer, a time length of a first downlink DRX retransmission timer, a first on-duration timer, a first inactivity timer, a first slot offset, and a first DRX cycle start offset.

For technical effect brought by some optional implementations of the second aspect, refer to the descriptions of the technical effect of the first aspect or the corresponding implementations of the first aspect.

According to a third aspect, a communication method is provided, and may be applied to a terminal device or may be applied to a chip inside the terminal device. The method includes: receiving third indication information, where the third indication information indicates information about a third service group scheduled by using downlink control information DCI, the third service group includes at least one third service, and the third service includes a broadcast service and/or a multicast service; and determining, based on the third indication information, whether to receive the third service group.

In this way, the terminal device learns, based on the third indication information, which third services may be scheduled by the network device by using a same G-RNTI, so that the terminal device can determine, before receiving a transport block, whether the transport block includes data of a third service that the terminal device is interested in, and determine whether to receive the transport block. Therefore, receiving of data of an unnecessary third service by the terminal device is avoided, and power consumption of the terminal device is reduced.

In a possible implementation, the method further includes: monitoring a physical downlink control channel PDCCH, and receiving DCI on the PDCCH; and the determining, based on the third indication information, whether to receive the third service group includes: determining, based on the third indication information, whether a resource scheduled by using the DCI carries a transport block, where the transport block includes data of the third service group.

In a possible implementation, the method further includes: receiving fourth indication information, where the fourth indication information indicates whether a physical downlink control channel PDCCH carries the DCI for scheduling the third service group; and determining, based on the fourth indication information, whether to monitor a PDCCH, and if it is determined to monitor the PDCCH, receiving the DCI on the PDCCH; and the determining, based on the third indication information, whether to receive the third service group includes: determining, based on the third indication information, whether to receive a transport block carried on a resource scheduled by using the DCI, where the transport block includes data of the third service group.

In this way, before determining to monitor the PDCCH, the terminal device may determine, based on the fourth indication information, whether the PDCCH carries the DCI for scheduling the third service group, so that the terminal device may determine, before receiving the transport block including the data of the third service group, whether to monitor the PDCCH. This helps the terminal device further reduce power consumption.

In a possible implementation, the determining, based on the third indication information, whether to receive the third service group includes: determining, based on the third indication information, whether to monitor a physical downlink control channel PDCCH; and if determining to monitor the PDCCH, receiving DCI on the PDCCH, and receiving a transport block carried on a resource scheduled by using the DCI, where the transport block includes data of the third service group.

In this way, the terminal device does not need to determine, from the DCI on the PDCCH, the information about the third service group carried on a PDSCH scheduled by using the DCI, and the terminal device may directly determine, from the third indication information, the information about the third service group scheduled by using the DCI, so as to determine whether to monitor the PDCCH and receive a transport block on the PDSCH. In this way, not only signaling overheads can be reduced, and power consumption of the terminal device can be further reduced.

In a possible implementation, the method further includes: receiving third configuration information, and receiving a third message based on the third configuration information, where the third indication information is included in the third message, the third configuration information includes a fifth information element and a sixth information element, the fifth information element indicates a time domain position and/or a frequency domain position for monitoring the third message, and the sixth information element indicates a position of the third indication information in the third message.

In a possible implementation, a correspondence between the third indication information and a plurality of third services is any one of the following correspondences: a one-to-one correspondence, a one-to-many correspondence, a many-to-one correspondence, or a many-to-many correspondence.

In a possible implementation, the third indication information includes a session identifier and a group identifier of the third service.

When a correspondence between a DCI information block and a plurality of third services is a one-to-many correspondence, because one information block corresponds to the plurality of third services, indication information may be sent for the plurality of third services by sending one information block, to avoid sending the indication information for each third service. Therefore, signaling overheads can be reduced.

In a possible implementation, a bit position of the third indication information in a corresponding DCI information block is configured based on the third configuration information, or a protocol is used to agree that the third indication information is located at a start bit in the corresponding DCI information block.

In this way, a manner in which the third indication information is agreed in the protocol to be located in the start bit in the corresponding DCI information block can reduce bit overheads.

In a possible implementation, the method further includes: receiving the transport block, where the transport block includes one or more first data packets, and each first data packet includes a data packet of the at least one third service; and when a third service corresponding to the first data packet is a service that the terminal device is not interested in, discarding the first data packet or discarding the transport block including the first data packet.

In a possible implementation, the transport block further includes an identifier of the third service.

In this way, the terminal device may choose, based on the identifier of the third service in the transport block, to receive or discard a sub-data packet of each third service in a medium access control protocol data unit (media access control protocol data unit, MAC PDU), so as to further avoid receiving data of an unnecessary third service. This saves power, and avoids fuzzy behavior of the terminal device.

According to a fourth aspect, a communication method is provided, and may be applied to a network device or may be applied to a chip inside the network device. The method includes: obtaining third indication information, where the third indication information indicates information about a third service group scheduled by using downlink control information DCI, the third service group includes at least one third service, and the third service includes a broadcast service and/or a multicast service; and sending the third indication information.

In this way, the network device sends the third indication information to a terminal device, so that the terminal device can obtain information about third services scheduled by using a same G-RNTI. Further, before receiving a transport block, the terminal device may determine whether the transport block includes data of a third service that the terminal device is interested in, and then determine whether to receive the transport block. Therefore, receiving of data of unnecessary third service by the terminal device is avoided, and power of the terminal device is saved.

In a possible implementation, the method further includes: sending fourth indication information, where the fourth indication information indicates whether a physical downlink control channel PDCCH carries the DCI for scheduling the third service group.

In a possible implementation, the method further includes: sending third configuration information, and sending a third message based on the third configuration information, where the third indication information is included in the third message, the third configuration information includes a fifth information element and a sixth information element, the fifth information element indicates a time domain position and/or a frequency domain position at which the terminal device monitors the third message, and the sixth information element indicates a position of the third indication information in the third message.

In a possible implementation, the method further includes: sending fourth configuration information, where the fourth configuration information is used to receive a fourth message, and the fourth indication information is included in the fourth message; and the fourth configuration information includes a seventh information element and an eighth information element, the seventh information element indicates a time domain position and/or a frequency domain position at which the terminal device monitors the fourth message, and the eighth information element indicates a position of the fourth indication information in the fourth message.

In a possible implementation, the third indication information includes a session identifier or a group identifier of the third service.

In a possible implementation, a correspondence between the third indication information and a plurality of third services is any one of the following correspondences: a one-to-one correspondence, a one-to-many correspondence, a many-to-one correspondence, or a many-to-many correspondence.

In a possible implementation, a bit position of the third indication information in a corresponding DCI information block is configured based on the third configuration information, or a protocol is used to agree that the third indication information is located at a start bit in the corresponding DCI information block.

In a possible implementation, assistance information is received from a core network device, where the assistance information indicates information about the at least one third service multiplexed into a same transport block, indicates information about the at least one third service with a same service attribute, or indicates an association relationship of a session of the at least one third service.

For technical effect brought by some optional implementations of the fourth aspect, refer to the descriptions of the technical effect of the third aspect or the corresponding implementations of the third aspect.

According to a fifth aspect, a communication apparatus is provided. The communication apparatus may be a terminal device or a chip disposed in the terminal device. The apparatus includes a transceiver module and a processing module.

The transceiver module is configured to receive first indication information, where the first indication information corresponds to a first service group, the first service group includes at least one first service, and the first service includes a broadcast service and/or a multicast service.

The processing module is configured to determine, based on the first indication information, whether to monitor a physical downlink control channel PDCCH corresponding to the first service group.

In this way, the terminal device determines, by receiving the indication information that is sent by a network device and that is for the broadcast and/or multicast service, whether to monitor the PDCCH corresponding to the broadcast and/or multicast service, so that power consumption caused by unnecessary PDCCH monitoring by the terminal device can be avoided.

In a possible implementation, the transceiver module is further configured to: receive first configuration information, where the first configuration information includes a first information element, the first information element indicates a time domain position and/or a frequency domain position for monitoring a first message, and the first message carries the first indication information; and receive the first message based on the first configuration information.

In a possible implementation, the transceiver module is further configured to receive the first configuration information, where the first configuration information includes a second information element, and the second information element indicates a position of the first indication information in the first message.

In a possible implementation, the time domain position includes a start time domain position and a monitoring time period, and the monitoring time period indicates a time length for monitoring the first message; or the time domain position includes a start time domain position and an end time domain position; and the first information element includes a first offset, and the first offset is used to determine the start time domain position for monitoring.

In a possible implementation, the first offset may be in a unit of a time unit, and the time unit may be a subframe, a slot, a symbol, or a time unit of another granularity.

In a possible implementation, a value of the first offset may be a natural number. For example, the first offset is 0, 1, 3, or another value.

In a possible implementation, the first information element further includes a monitoring time period corresponding to the first service group, and the second information element includes a size of the first message and first position information, or the second information element includes a start position of the first message and second position information.

In a possible implementation, the first indication information is included in a first message, the first message further includes second indication information, the second indication information corresponds to a second service group, the second service group includes at least one second service, the second service includes at least one of a broadcast service, a multicast service, or a unicast service, and the second indication information is used to determine whether to monitor a PDCCH corresponding to the second service group.

In a possible implementation, the transceiver module is further configured to: receive second configuration information, and determine, based on the second configuration information, an occasion for monitoring the second indication information, where the second configuration information includes a third information element and a fourth information element, and the third information element includes a second offset.

In a possible implementation, the processing module is further configured to determine, by the terminal device based on the first offset and the second offset, to monitor the first message at a same position, where the first message includes the first indication information and the second indication information.

In a possible implementation, the processing module is specifically configured to: when a start position of a DRX-on state corresponding to the first service group is the same as a start position of a DRX-on state corresponding to the second service group, the first offset corresponding to the first service group is the same as the second offset corresponding to the second service group.

In a possible implementation, the processing module is specifically configured to: when a start position of a DRX-on state corresponding to the first service group is different from a start position of a DRX-on state corresponding to the second service group, the first offset corresponding to the first service group is different from the second offset corresponding to the second service group.

In a possible implementation, the first message includes physical downlink control information DCI, a media access control control element MAC CE, or a radio resource control RRC message.

In a possible implementation, a PDCCH is monitored based on discontinuous reception DRX configuration corresponding to the first service group, where the DRX configuration includes at least one of the following: a time length of a first downlink hybrid automatic repeat request round trip time timer, a time length of a first downlink DRX retransmission timer, a first on-duration timer, a first inactivity timer, a first slot offset, and a first DRX cycle start offset.

For the fifth aspect or various optional implementations and technical effect of the fifth aspect, refer to the foregoing descriptions of technical effect of the corresponding implementations of the first aspect.

According to a sixth aspect, a communication apparatus is provided. The communication apparatus may be a network device or a chip disposed in the network device. The apparatus includes a processing module and a transceiver module.

The processing module is configured to obtain first indication information, where the first indication information corresponds to a first service group, the first service group includes at least one first service, and the first service includes a broadcast service and/or a multicast service.

The transceiver module is configured to send the first indication information.

In a possible implementation, the transceiver module is further configured to: send first configuration information, where the first configuration information includes a first information element, the first information element indicates a time domain position and/or a frequency domain position at which a terminal device monitors a first message, and the first message includes the first indication information; and send the first message based on the first configuration information.

In a possible implementation, the transceiver module is further configured to send first configuration information, where the first configuration information includes a second information element, and the second information element indicates a position of the first indication information in the first message.

In a possible implementation, the time domain position includes a start time domain position and a monitoring time period, and the monitoring time period indicates a time length for monitoring the first message; or the time domain position includes a start time domain position and an end time domain position; and the first information element includes a first offset, and the first offset is used to determine the start time domain position for monitoring.

In a possible implementation, the first offset may be in a unit of a time unit, and the time unit may be a subframe, a slot, a symbol, or a time unit of another granularity.

In a possible implementation, a value of the first offset may be a natural number. For example, the first offset is 0, 1, 3, or another value.

In a possible implementation, the first information element further includes a monitoring time period corresponding to the first service group, and the second information element includes a size of the first message and first position information, or the second information element includes a start position of the first message and second position information.

In a possible implementation, the first indication information is included in a first message, the first message further includes second indication information, the second indication information corresponds to a second service group, the second service group includes at least one second service, the second service includes at least one of a broadcast service and/or a multicast service, or a unicast service, and the second indication information is used to determine whether to monitor a PDCCH corresponding to the second service group.

In a possible implementation, the transceiver module is further configured to: send second configuration information, and determine, based on the second configuration information, an occasion for monitoring the second indication information. The second configuration information includes a third information element and a fourth information element, and the third information element includes a second offset.

In a possible implementation, the first message includes the first indication information and the second indication information, and the network device determines the first offset and the second offset, so that the terminal device determines, based on the first offset and the second offset, to monitor the first message at a same position.

In a possible implementation, a value of the first offset corresponding to the first service group is the same as a value of the second offset corresponding to the second service group.

In a possible implementation, a value of the first offset corresponding to the first service group is different from a value of the second offset corresponding to the second service group.

In a possible implementation, the first message includes physical downlink control information DCI, a media access control control element MAC CE, or a radio resource control RRC message.

In a possible implementation, discontinuous reception DRX configuration is sent, where the DRX configuration includes at least one of the following: a time length of a first downlink hybrid automatic repeat request round trip time timer, a time length of a first downlink DRX retransmission timer, a first on-duration timer, a first inactivity timer, a first slot offset, and a first DRX cycle start offset.

For the sixth aspect or various optional implementations and technical effect of the sixth aspect, refer to the foregoing descriptions of technical effect of corresponding implementations of the second aspect.

According to a seventh aspect, a communication apparatus is provided. The communication apparatus may be a terminal device or a chip disposed in the terminal device. The apparatus includes a processing module and a transceiver module.

The transceiver module is configured to receive third indication information, where the third indication information indicates information about a third service group scheduled by using downlink control information DCI, the third service group includes at least one third service, and the third service includes a broadcast service and/or a multicast service.

The processing module is configured to determine, based on the third indication information, whether to receive the third service group.

In a possible implementation, the processing module is further configured to: monitor a physical downlink control channel PDCCH, and receive the DCI on the PDCCH; and the processing module is specifically further configured to determine, based on the third indication information, whether a resource scheduled by using the DCI carries a transport block, where the transport block includes data of the third service group.

In a possible implementation, the transceiver module is further configured to receive fourth indication information, where the fourth indication information indicates whether a physical downlink control channel PDCCH carries the DCI for scheduling the third service group. The processing module is further configured to: determine, based on the fourth indication information, whether to monitor the PDCCH, and if determining to monitor the PDCCH, receive the DCI on the PDCCH. The processing module is further configured to determine, based on the third indication information, whether to receive the third service group, and is specifically configured to determine, based on the third indication information, whether to receive a transport block carried on a resource scheduled by using the DCI, where the transport block includes data of the third service group.

In a possible implementation, the processing module is specifically configured to: determine, based on the third indication information, whether to monitor a physical downlink control channel PDCCH; and if determining to monitor the PDCCH, receive DCI on the PDCCH, and receive a transport block carried on a resource scheduled by using the DCI, where the transport block includes data of the third service group.

In a possible implementation, the transceiver module is further configured to: receive third configuration information, and receive a third message based on the third configuration information, where the third indication information is included in the third message, the third configuration information includes a fifth information element and a sixth information element, the fifth information element indicates a time domain position and/or a frequency domain position for monitoring the third message, and the sixth information element indicates a position of the third indication information in the third message.

In a possible implementation, a correspondence between the third indication information and a plurality of third services is any one of the following correspondences: a one-to-one correspondence, a one-to-many correspondence, a many-to-one correspondence, or a many-to-many correspondence.

In a possible implementation, the third indication information includes a session identifier and a group identifier of the third service.

In a possible implementation, a bit position of the third indication information in a corresponding DCI information block is configured based on the third configuration information, or a protocol is used to agree that the third indication information is located at a start bit in the corresponding DCI information block.

In a possible implementation, the transceiver module is further configured to receive a transport block, where the transport block includes one or more first data packets, and each first data packet includes a data packet of the at least one third service; and when a third service corresponding to the first data packet is a service that the terminal device is not interested in, the processing module is further configured to discard the first data packet, or discard the transport block including the first data packet.

In a possible implementation, the transport block further includes an identifier of the third service.

For the seventh aspect or various optional implementations and technical effect of the seventh aspect, refer to the foregoing descriptions of technical effect of corresponding implementations of the third aspect.

According to an eighth aspect, a communication apparatus is provided. The communication apparatus may be a network device or a chip disposed in the network device. The apparatus includes a processing module and a transceiver module.

The processing module is configured to obtain third indication information, where the third indication information indicates information about a third service group scheduled by using downlink control information DCI, the third service group includes at least one third service, and the third service includes a broadcast service and/or a multicast service.

The transceiver module is configured to send the third indication information.

In a possible implementation, the transceiver module is further configured to send fourth indication information, where the fourth indication information indicates whether a physical downlink control channel PDCCH carries the DCI for scheduling the third service group.

In a possible implementation, the transceiver module is further configured to: send third configuration information, and send a third message based on the third configuration information, where the third indication information is included in the third message, the third configuration information includes a fifth information element and a sixth information element, the fifth information element indicates a time domain position and/or a frequency domain position at which a terminal device monitors the third message, and the sixth information element indicates a position of the third indication information in the third message.

In a possible implementation, the transceiver module is further configured to send fourth configuration information, where the fourth configuration information is used to receive a fourth message, the fourth indication information is included in the fourth message, the fourth configuration information includes a seventh information element and an eighth information element, the seventh information element indicates a time domain position and/or a frequency domain position at which a terminal device monitors the fourth message, and the eighth information element indicates a position of the fourth indication information in the fourth message.

In a possible implementation, the third indication information includes a session identifier and a group identifier of the third service.

In a possible implementation, a correspondence between the third indication information and a plurality of third services is any one of the following correspondences: a one-to-one correspondence, a one-to-many correspondence, a many-to-one correspondence, or a many-to-many correspondence.

In a possible implementation, a bit position of the third indication information in a corresponding DCI information block is configured based on the third configuration information, or a protocol is used to agree that the third indication information is located at a start bit in the corresponding DCI information block.

In a possible implementation, the transceiver module is further configured to receive assistance information from a core network device, where the assistance information indicates information about the at least one third service multiplexed into a same transport block, indicates information about the at least one third service with a same service attribute, or indicates an association relationship of a session of the at least one third service.

For the eighth aspect or various optional implementations and technical effect of the eighth aspect, refer to the foregoing descriptions of technical effect of corresponding implementations of the fourth aspect.

According to a ninth aspect, a communication apparatus is provided. The apparatus includes at least one processor and a communication interface, the at least one processor is coupled to at least one memory, the at least one processor is configured to execute a computer program or instructions stored in the at least one memory, and the communication interface is configured to send and receive information, so that the communication apparatus implements the communication method in any one of the first aspect or the implementations of the first aspect, or the communication apparatus implements the communication method in the implementations of the second aspect, or the communication apparatus implements the communication method in any one of the third aspect or the implementations of the third aspect, or the communication apparatus implements the communication method in any one of the fourth aspect or the implementations of the fourth aspect.

According to a tenth aspect, a chip is provided. The chip includes a processor and a data interface. The processor invokes a computer program from a memory through the data interface and runs the computer program, so that a device on which a chip system is installed performs the communication method in any one of the first aspect or the implementations of the first aspect, or a device on which a chip system is installed performs the communication method in the implementations of the second aspect, or a device on which a chip system is installed performs the communication method in any one of the third aspect or the implementations of the third aspect, or a device on which a chip system is installed performs the communication method in the implementations of the fourth aspect.

According to an eleventh aspect, a computer-readable medium is provided. The computer-readable medium stores executable program code by a device. The program code is used to perform the communication method in any one of the first aspect or the implementations of the first aspect, or the program code is used to perform the communication method in the implementations of the second aspect, or the program code is used to perform the communication method in any one of the third aspect or the implementations of the third aspect, or the program code is used to perform the communication method in the implementations of the fourth aspect.

According to a twelfth aspect, a computer program product is provided. The computer program product includes computer program code. When the computer program code is run on a computer, the computer is enabled to perform the communication method in any one of the first aspect or the implementations of the first aspect, or the computer is enabled to perform the communication method in the implementations of the second aspect, or the computer is enabled to perform the communication method in any one of the third aspect or the implementations of the third aspect, or the computer is enabled to perform the communication method in the implementations of the fourth aspect.

According to a thirteenth aspect, a communication system is provided, including any terminal apparatus according to any one of the fifth aspect or the implementations of the fifth aspect and any network apparatus according to any one of the sixth aspect or the implementations of the sixth aspect, or any terminal apparatus according to any one of the seventh aspect or the implementations of the seventh aspect and any network apparatus according to any one of the eighth aspect or the implementations of the eighth aspect.

## BRIEF DESCRIPTION OF DRAWINGS

FIG. 1 is a schematic diagram of a network architecture to which an embodiment of this application is applicable;
FIG. 2 is a schematic diagram of another network architecture to which an embodiment of this application is applicable;
FIG. 3 is a schematic diagram of still another network architecture to which an embodiment of this application is applicable;
FIG. 4 is a schematic flowchart corresponding to a communication method according to an embodiment of this application;
FIG. 5 is a schematic diagram of a DRX working mechanism according to an embodiment of this application;
FIG. 6 is a schematic diagram of a WUS working mechanism according to an embodiment of this application;
FIG. 7 is a schematic flowchart corresponding to a communication method applied in a scenario of a DRX working mechanism according to an embodiment of this application;
FIG. 8 is a schematic diagram of a scenario in which both a first service and a second service are broadcast services and/or multicast services according to an embodiment of this application;
FIG. 9 is a schematic diagram of a scenario in which a first service is a broadcast service and/or a multicast service and a second service is a unicast service according to an embodiment of this application;
FIG. 10 is a schematic diagram of a scenario of scheduling N MBSs by using a same G-RNTI according to an embodiment of this application;
FIG. 11 is a schematic flowchart corresponding to another communication method according to an embodiment of this application;
FIG. 12 is a schematic flowchart corresponding to still another communication method according to an embodiment of this application;
FIG. 13 is a schematic diagram of a correspondence between an MBS and an information block in DCI according to an embodiment of this application;
FIG. 14 is a schematic diagram of receiving MBS data according to an embodiment of this application;
FIG. 15 is a schematic flowchart of receiving MBS data according to an embodiment of this application;
FIG. 16 is a schematic flowchart corresponding to yet another communication method according to an embodiment of this application;
FIG. 17 is another schematic diagram of receiving MBS data according to an embodiment of this application;
FIG. 18 is another schematic flowchart of receiving MBS data according to an embodiment of this application;
FIG. 19 is still another schematic diagram of receiving MBS data according to an embodiment of this application;
FIG. 20 is still another schematic flowchart of receiving MBS data according to an embodiment of this application;
FIG. 21 is a schematic diagram of a communication apparatus according to an embodiment of this application;
FIG. 22 is a schematic diagram of another communication apparatus according to an embodiment of this application;
FIG. 23 is a schematic diagram of still another communication apparatus according to an embodiment of this application; and
FIG. 24 is a schematic diagram of yet another communication apparatus according to an embodiment of this application.

**DESCRIPTION OF EMBODIMENTS**

The following clearly and completely describes technical solutions in embodiments of this application with reference to accompanying drawings in embodiments of this application.

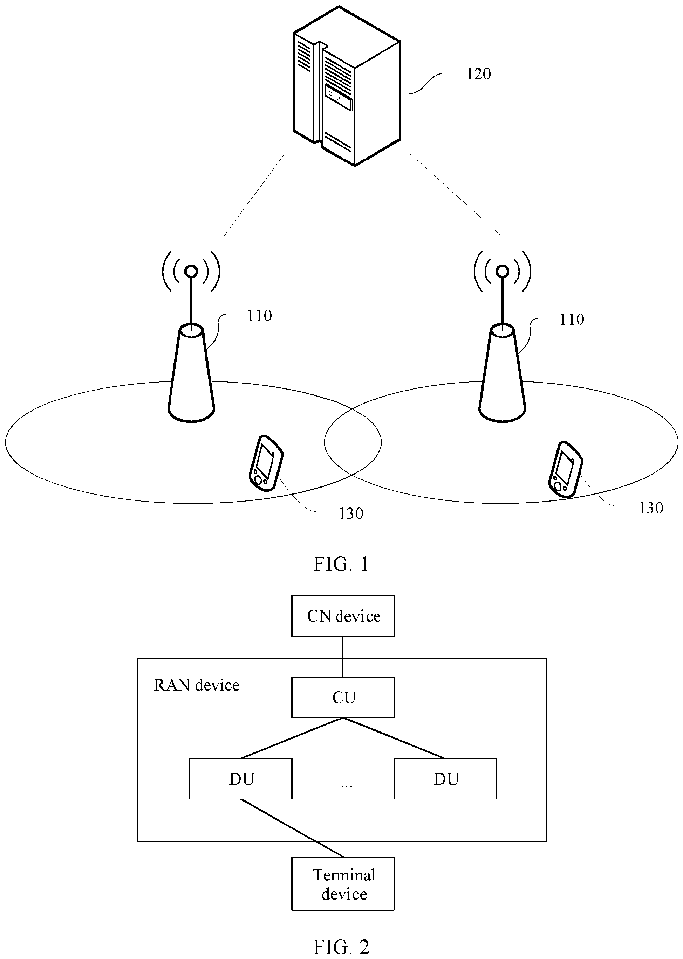

FIG. 1 is a schematic diagram of an architecture to which an embodiment of this application is applicable. As shown in FIG. 1, a terminal device 130 may access a wireless network, to obtain a service of an external network (for example, the Internet) through the wireless network, or communicate with another device through the wireless network, for example, may communicate with the another terminal device. The wireless network includes a radio access network (radio access network, RAN) 110 and a core network (core network, CN) 120. The RAN 110 is configured to connect the terminal device 130 to the wireless network, and the CN 120 is configured to manage the terminal device and provide a gateway for communicating with the external network.

The terminal device may be a wireless terminal device that can receive scheduling and indication information of a network device. The wireless terminal device may be a device that provides a user with voice and/or data connectivity, a handheld device with a wireless connection function, or another processing device connected to a wireless modem. The terminal device may communicate with the Internet or one or more core networks through a radio access network (radio access network, RAN). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or in-vehicle mobile apparatus that exchanges voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer with a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. The terminal device may alternatively be a wearable device, a terminal device in a next-generation communication system such as a 5G communication system, a future evolved public land mobile network (public land mobile network, PLMN), or the like.

The network device may be a device in a wireless network. For example, the network device may be a radio access network (radio access network, RAN) node (or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in another possible case, the network device may be another apparatus that provides a wireless communication function for the terminal device. A specific technology and a specific device form that are used by the network device are not limited in embodiments of this application. For ease of description, in embodiments of this application, the apparatus that provides the wireless communication function for the terminal device is referred to as a network device.

The RAN may include one or more RAN devices, as shown in FIG. 1.

When the network architecture shown in FIG. 1 is applicable to a 5G communication system, the CN device 120 may be an access and mobility management function (access and mobility management function, AMF) entity, a user plane function (user plane function, UPF) entity, or the like.

It should be understood that quantities of devices in the communication system shown in FIG. 1 are merely used as an example. Embodiments of this application are not limited thereto. In an actual application, the communication system may further include more terminal devices and more RAN devices, and may further include another device.

FIG. 2 is a schematic diagram of another network architecture to which an embodiment of this application is applicable. As shown in FIG. 2, the network architecture includes a CN device, a RAN device, and a terminal device. The RAN device may include a centralized unit (centralized unit, CU) node, a distributed unit (distributed unit, DU) node, or a RAN device including a CU node and a DU node. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or some functions are independently implemented and some functions are integrated into the baseband apparatus. For example, the RAN device includes a baseband apparatus and a radio frequency apparatus. The radio frequency apparatus may be remotely disposed relative to the baseband apparatus.

For example, a remote radio unit (remote radio unit, RRU) is a remote radio unit disposed relative to a BBU.

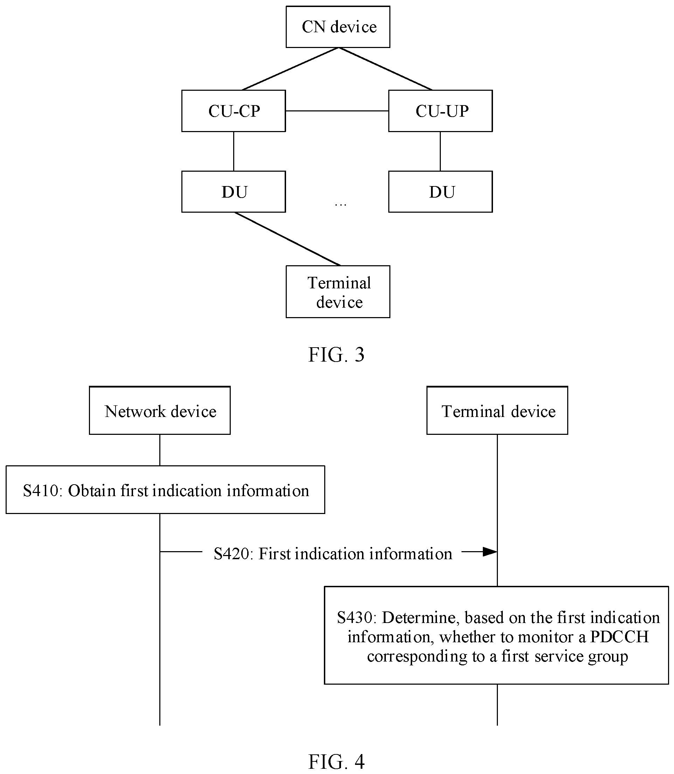

FIG. 3 is a schematic diagram of still another network architecture to which an embodiment of this application is applicable. Based on the network architecture shown in FIG. 2, in FIG. 3, a control plane (CP) and a user plane (UP) of a CU may be further separated and implemented as different entities, which are a control plane (control plane, CP) CU entity (namely, a CU-CP entity) and a user plane (user plane, UP) CU entity (namely, a CU-UP entity), respectively.

In the foregoing network architecture, signaling generated by the CU may be sent to a terminal device by using a DU, or signaling generated by a terminal device may be sent to the CU by using a DU. The DU may transparently transmit the signaling to the terminal device or the CU by directly encapsulating the signaling at a protocol layer without parsing the signaling. In the following embodiments, if transmission of such signaling between the DU and the terminal device is included, sending or receiving of the signaling by the DU includes this scenario.

The network architectures shown in FIG. 1, FIG. 2, or FIG. 3 are applicable to communication systems of various radio access technologies (radio access technologies, RATs). For example, the communication system may be a 4G (or referred to as LTE) communication system, or may be a 5G (or referred to as new radio (new radio, NR)) communication system, or may be a transition system between the LTE communication system and the 5G communication system, or certainly may be a future communication system. The transition system may also be referred to as a 4.5G communication system. Network architectures and service scenarios described in embodiments of this application are intended to describe the technical solutions in embodiments of this application more clearly, and do not constitute any limitation on the technical solutions provided in embodiments of this application. A person of ordinary skill in the art may know that, with evolution of the communication network architecture and emergence of new service scenarios, the technical solutions provided in embodiments of this application are also applicable to resolving similar technical problems.

The apparatus in the following embodiments of this application may be located in a terminal device or a network device based on a function implemented by the apparatus. When the foregoing CU-DU structure is used, the network device may be a CU, a DU, or a RAN device including a CU and a DU.

The terms "system" and "network" may be used interchangeably in embodiments of this application. "At least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. A character "/" usually indicates an "or" relationship between associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, a priority, or importance of the plurality of objects. For example, the first indication information and the second indication information in this specification are merely used to distinguish between the two types of indication information, and do not indicate a sequence, a time sequence, a priority, or importance of the two types of information.

Currently, to reduce power consumption of a terminal device when a unicast service is received, a wake-up signal (wake-up signal, WUS) mechanism for the unicast service is proposed. However, when a broadcast and/or multicast service needs to be used in a future application scenario, the broadcast and/or multicast service may be sent in a unicast manner or a multicast manner, and the WUS mechanism for the unicast service cannot meet a requirement of receiving a multicast broadcast service by the terminal device. Therefore, the terminal device cannot determine whether to monitor physical downlink control channels (physical downlink control channels, PDCCHs) of some broadcast and/or multicast services. Consequently, the terminal device needs to monitor PDCCHs of all broadcast and/or multicast services. Such unnecessary monitoring by the terminal device causes power consumption of the terminal device. Therefore, how to develop a power saving mechanism for receiving a broadcast and/or multicast service by the terminal device is an urgent problem to be resolved. To resolve the foregoing problem, embodiments of this application provide a communication method and apparatus. The following provides specific descriptions with reference to the accompanying drawings.

FIG. 4 is a schematic flowchart corresponding to a communication method according to an embodiment of this application. The method includes but is not limited to the following steps.

S410: A network device obtains first indication information, where the first indication information corresponds to a first service group, the first service group includes at least one first service, and the first service includes a broadcast service and/or a multicast service.

The first indication information indicates a terminal device whether to monitor a PDCCH corresponding to the first service group, that is, the first indication information is indication information indicating whether to wake up the terminal device to monitor the PDCCH corresponding to the first service group. The first indication information may also have another name. This is not limited in embodiments of this application.

The broadcast and/or multicast service may also be referred to as a multicast broadcast service MBS. The multicast broadcast service is a point-to-multipoint communication solution. In this communication solution, a data packet is transmitted from one network device to a plurality of terminal devices. Broadcast transmission indicates that the network device may send the service to all terminal devices. Multicast transmission may also be referred to as multicast transmission. Multicast transmission indicates that the network device may send the service to a terminal device that subscribes to the service.

The network device may obtain the first indication information in a plurality of manners. For example, the network device obtains the first indication information from the network device. Specifically, the network device obtains the first indication information in manners such as a manner in which the first indication information is pre-determined by using a protocol, or a manner in which the first indication information is generated by the network device. For another example, the network device receives the first indication information from another network device. This is not limited in embodiments of this application.

S420: The network device sends the first indication information to the terminal device, and correspondingly, the terminal device receives the first indication information from the network device.

In a possible implementation, the first indication information is included in a first message. The first message may be downlink control information (downlink control information, DCI), a media access control control element (media access control control element, MAC CE), or a radio resource control (radio resource control, RRC) message. The first message may alternatively be another message. This is not limited in embodiments of this application.

It may be understood that the first indication information herein corresponds to the first service group. In other words, the first indication information is associated with the first service group. To be specific, the terminal device may determine, based on the first indication information, whether to monitor the PDCCH corresponding to the first service group. Specifically, the correspondence between the first indication information and the first service group may be preset in a protocol, or may be configured by the network device by using dedicated signaling. The dedicated signaling may be an RRC message, DCI, or a MAC CE.

Optionally, the correspondence between the first indication information and the first service group may be any one of a one-to-one correspondence, a one-to-many correspondence, a many-to-one correspondence, or a many-to-many correspondence. The correspondence between the first indication information and the first service group is in one-to-one representation, and the first indication information may indicate whether the terminal device monitors the PDCCH corresponding to the first service group. The correspondence between the first indication information and the first service group is in one-to-many representation, and in addition to indicating the terminal device whether to monitor the PDCCH corresponding to the first service group, the first indication information may further indicate whether the terminal device monitors a PDCCH corresponding to another service group. The correspondence between the first indication information and the first service group is in many-to-one representation. A plurality of pieces of indication information may indicate whether to monitor a PDCCH corresponding to one service group, and any one of the plurality of pieces of indication information may indicate whether to monitor the PDCCH corresponding to the service group, or the plurality of pieces of indication information jointly indicate whether to monitor the PDCCH corresponding to the service group. The correspondence between the first indication information and the first service group is in many-to-many representation. A plurality of pieces of indication information may indicate PDCCHs corresponding to different service groups. For example, the plurality of pieces of indication information include indication information 1, indication information 2, indication information 3, and indication information 4. The service groups include a service group 1, a service group 2, and a service group 3. The indication information 1, the indication information 2, and the indication information 3 may jointly indicate whether to monitor the service group 1, and the indication information 1, the indication information 2, and the indication information 4 may jointly indicate whether to monitor the service group 2. This is not limited in this application.

Different service groups are distinguished based on whether services included in each service group are services with similar requirements. In other words, services with similar requirements are grouped into a same service group, and services with different requirements are grouped into different service groups. For example, services in the first service group include a plurality of first services, and the plurality of first services are services with similar requirements. The plurality of first services with similar requirements may be understood as that transmission performance requirements of the plurality of first services are similar. For example, transmission performance may be represented by using one or more of the following performance indicators: delay, reliability, packet error rate, priority, QoS flow identifier (QoS Flow ID, QFI), and the like. Optionally, services included in different service groups may all be multicast broadcast services, that is, the different service groups are divided in a multicast broadcast service; or services included in different service groups may all be unicast services, that is, the different service groups are divided in a unicast service; or the multicast broadcast service and the unicast service may be used as two different service groups

S430: The terminal device determines, based on the first indication information, whether to monitor the PDCCH corresponding to the first service group.

The terminal device may determine, based on the first indication information corresponding to the first service group, whether to monitor PDCCHs corresponding to different service groups. For example, if the first indication information indicates the terminal device to monitor the PDCCH corresponding to the first service group, the terminal device determines to monitor the PDCCH corresponding to the first service group; or if the first indication information indicates the terminal device not to monitor the PDCCH corresponding to the first service group, the terminal device determines not to monitor the PDCCH corresponding to the first service group. It may be understood that the first indication information corresponds to the first service group, and other different service groups also have respective corresponding indication information. A quantity of service groups is not limited in embodiments of this application.

In a possible implementation, if the terminal device does not receive the first indication information within a time period T or the terminal device does not receive the first indication information for M consecutive times, to avoid missing monitoring the PDCCH corresponding to the first service group, the terminal device determines to monitor the PDCCH corresponding to the first service group. Herein, that the terminal device does not receive the first indication information may be that the network device does not send the first indication information, or the network device sends the first indication information but the terminal device does not receive the first indication information. M is a positive integer greater than or equal to 1. Optionally, T and/or M herein may be preset in a protocol, or may be configured by the network device. This is not limited in this application.

In the technical solutions in embodiments of this application, the terminal device may determine, by receiving the first indication information sent by the network device, whether to monitor a PDCCH corresponding to a broadcast and/or multicast service, so that power consumption caused by unnecessary PDCCH monitoring by the terminal device can be avoided, thereby reducing power consumption of the terminal device.

The foregoing content describes the technical solutions in embodiments of this application in a general manner. The embodiments of this application may be further applied to a discontinuous reception (discontinuous reception, DRX) scenario. The following describes this in detail.

Currently, a packet-based data stream is usually bursty, and there may be data transmission in a period of time, but there may be no data transmission in a long period of time. Therefore, a network device configures discontinuous reception (discontinuous reception, DRX) for a terminal device, to control a behavior of monitoring a PDCCH by the terminal device. When monitoring is not needed, the terminal device may stop monitoring the PDCCH, to reduce power consumption of the terminal, thereby saving power of the terminal device.

Currently, a network device may send DRX configuration to a terminal device in connected (RRC-connected) mode, to control the terminal device to save energy of the terminal.

DRX has two cycles: a long DRX cycle (long DRX cycle) and a short DRX cycle (short DRX cycle). Regardless of which type of DRX is used by the terminal device, the network device may send corresponding DRX configuration to the terminal device by using RRC signaling, to control the terminal device to be in a DRX-on state or a DRX-off state. When the terminal device is in the DRX-on state, that is, when the terminal device is in a non-sleep state, the terminal device may monitor a PDCCH to obtain a scheduling command sent by the network device to the terminal device. When the terminal device is in the DRX-off state, that is, when the terminal device is in a sleep state, the terminal device does not monitor a PDCCH, and the network device does not send a scheduling command to the terminal device. In this manner, the terminal device does not need to monitor the PDCCH constantly, thereby saving power

A specific DRX parameter is described in detail in this embodiment of this application. It may be understood that the following DRX configuration description is merely an example, and may also include another DRX parameter.

An on-duration timer (drx-onDurationTimer): A time length of this timer indicates duration in which the terminal device is in a DRX-on state.

A slot offset (drx-SlotOffset): The offset is used to determine a delay of waiting before the on-duration timer is started.

A long DRX cycle start offset (drx-LongStartOffset): The offset is used to determine a long DRX cycle and a start subframe number of the cycle.

An inactivity timer (drx-inactivity timer): A time length of this timer indicates duration after monitoring and detecting a PDCCH by the terminal device.

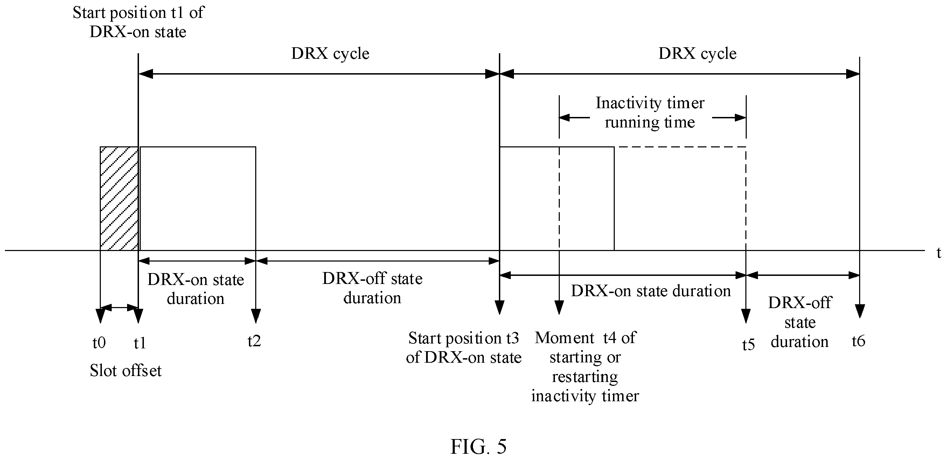

The following specifically describes a DRX working mechanism of a terminal device in DRX configuration with reference to FIG. 5. FIG. 5 is a schematic diagram of a DRX working mechanism according to an embodiment of this application.

As shown in FIG. 5, a horizontal axis in FIG. 5 represents time t. A terminal device obtains DRX configuration from a network device. The DRX configuration may include a slot offset, a DRX cycle, a DRX-on state duration timer, an inactivity timer, and the like. The terminal device can determine a start position t1 of a DRX-on state based on the DRX cycle and the slot offset, where a length of the slot offset is (t1-t0). The terminal device determines, by using the DRX-on state duration timer, that DRX-on state duration is (t2-11), and determines, by using the DRX-on state duration timer and the DRX cycle, that DRX-off state duration is (t3-t2). t3 is a start position of a DRX-on state of a next DRX cycle. In the 2nd DRX cycle shown in FIG. 5, the terminal device monitors and detects a PDCCH in DRX-on state duration, and starts or restarts the inactivity timer. In FIG. 5, the terminal device monitors and detects the PDCCH at a moment t4, and starts or restarts the inactivity timer. In this case, the DRX-on state duration is prolonged. When the inactivity timer expires at a moment t5, the terminal device enters a DRX-off state, and the DRX-off state lasts until a moment t6 at which the DRX cycle ends.

To improve energy saving performance of the terminal device, a DRX mechanism of the terminal device in an RRC-connected state is enhanced, and a PDCCH-based wake-up signal (PDCCH-based wake up signaling, PDCCH-based WUS) mechanism is proposed. The wake-up signal mechanism is referred to as a WUS mechanism for short below, and a wake-up signal is referred to as a WUS for short below.

A basic principle of the WUS mechanism is that a network device sends a "wake-up" signal before a DRX cycle of a terminal starts. If the terminal receives the wake-up signal, the UE wakes up and monitors a PDCCH. On the contrary, if the terminal does not receive the wake-up signal, the UE may skip the entire DRX cycle and does not monitor any PDCCH. As a wake-up signal, only a small amount of information needs to be transmitted to reduce power for receiving the wake-up signal. Optionally, when configuring the wake-up signal, the network device may associate the wake-up signal with one or more DRX cycles.

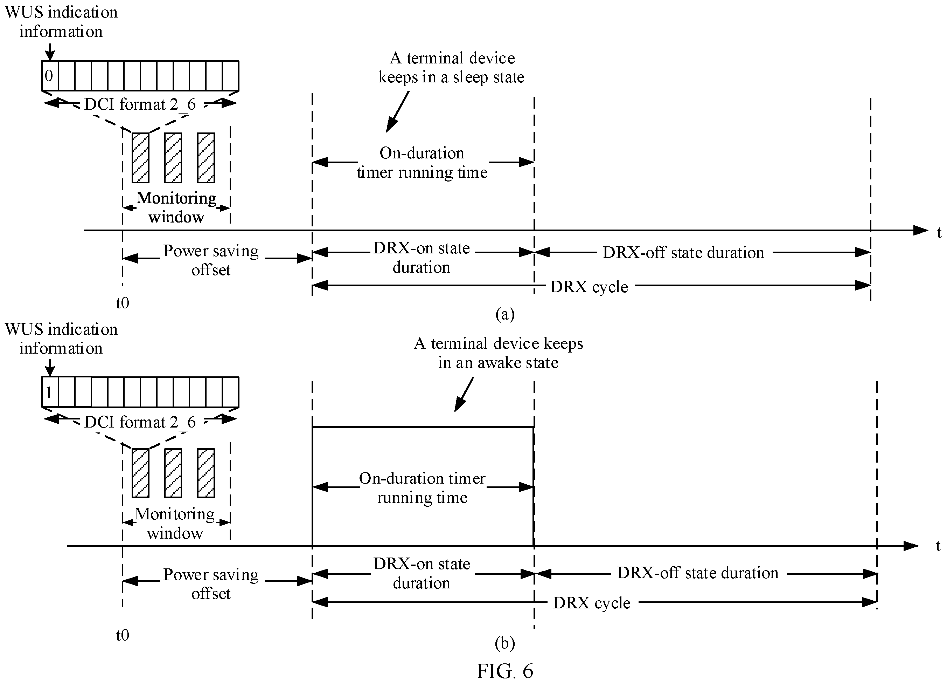

With reference to FIG. 6, the following specifically describes a working principle of a WUS mechanism of a terminal device in an RRC-connected state. FIG. 6 is a schematic diagram of a WUS working mechanism according to an embodiment of this application.

For ease of understanding, the following briefly describes some basic concepts in the WUS mechanism.

WUS indication information:

The WUS indication information indicates the terminal device whether to monitor a PDCCH corresponding to a unicast service, the WUS indication information is in a downlink control information format 2_6 (downlink control information format 2_6, DCI format 2_6), and the DCI format 2_6 includes WUS indication information of a plurality of terminal devices.

WUS configuration information:

The WUS configuration information is mainly used to determine an occasion at which the terminal device monitors a WUS, that is, used to determine a start position at which the terminal device monitors the WUS and monitoring duration. The WUS configuration information includes: (1) Power saving offset (power saving offset, PS_offset): The offset is used to indicate a time offset before an on-duration timer is started, and the offset may be used to determine a time domain position at which the terminal device starts to monitor the WUS.

(2) Monitoring window (monitoring window): This parameter is used to indicate a time length in which the terminal device monitors a WUS. In other words, the terminal device monitors the WUS in a time period indicated by the monitoring window. Optionally, a unit of the monitoring window may be monitoring occasion (monitoring occasion), millisecond (ms), second (s), slot (slot), symbol (symbol), or another time unit. The monitoring window herein may also be referred to as a "monitoring time period". This is not limited in embodiments of this application.

It may be understood that, if the unit of the monitoring window is a monitoring occasion, the monitoring window may be one or more monitoring occasions, and one monitoring occasion may be one opportunity for monitoring a PDCCH. Specifically, one monitoring occasion may be a time length (or referred to as duration) for monitoring the PDCCH once. A specific time length of a monitoring occasion may be defined in a protocol, or may be configured by using dedicated signaling. This is not limited in embodiments of this application.

(3) Power saving radio network temporary identifier (power saving radio network temporary identifier, PS_RNTI): The power saving radio network temporary identifier is used to monitor a WUS.

(4) Size of downlink control information 2_6 (size of downlink control information format 2_6, sizeDCI-2-6): The size of downlink control information 2_6 is used to indicate a size of the DCI format 2_6.

(5) Position in downlink control information 2_6 (ps-PositionDCI-2-6): The position in the downlink control information 2_6 is used to indicate start positions of indication information blocks corresponding to different terminal devices in the DCI format 2_6, and may further indicate that the 1st bit of an indication information block corresponding to the terminal device is WUS indication information.

The size of the downlink control information 2_6 and the position in the downlink control information 2_6 are used to determine an information structure of the DCI format 2_6.

The following describes a principle of the WUS mechanism with reference to (a) in FIG. 6 and (b) in FIG. 6. A terminal device monitors WUS indication information before a DRX-on state, and determines, through monitoring of the WUS indication information, whether to monitor a PDCCH or skip monitoring the PDCCH during the DRX-on state.

(a) in FIG. 6 is a schematic diagram of a scenario in which WUS indication information indicates a terminal device to sleep in a DRX-on state. (b) in FIG. 6 is a schematic diagram of a scenario in which WUS indication information indicates a terminal device to wake up in a DRX-on state.

First, as shown in (a) in FIG. 6 and (b) in FIG. 6, a horizontal axis represents time t, and WUS indication information is included in DCI. The terminal device determines, based on a power saving offset in WUS configuration information, a start time domain position t0 for monitoring the DCI, and the terminal device monitors the DCI based on the start time domain position for monitoring the DCI, a length of a monitoring window, and a PS_RNTI. Optionally, the WUS indication information is included in a DCI format 2_6. The terminal device determines an information structure of the DCI format 2_6 based on a size of the downlink control information 2_6 and a position in the downlink control information 2_6 in the WUS configuration information, and obtains a position of the WUS indication information in the DCI format 2_6. The DCI format 2_6 may include an indication information block of the terminal device, and the indication information block may include 1-bit WUS indication information. In (a) in FIG. 6, a value of the WUS indication information is 0, representing that the WUS indication information indicates the terminal device to keep sleeping in the DRX-on state, that is, skip monitoring the PDCCH in duration of the DRX-on state. In (b) in FIG. 6, a value of the WUS indication information is 1, representing that the WUS indication information indicates the terminal device to wake up in the DRX-on state, that is, monitor the PDCCH in duration of the DRX-on state.

A current wake-up signal WUS mechanism is for a terminal device, and is used to indicate the terminal device whether to monitor a PDCCH or skip monitoring a PDCCH during DRX-on. A current NR mechanism is for a unicast service. When a multicast broadcast service is introduced, because the multicast broadcast service may be sent in a unicast manner or a multicast manner, if an existing WUS mechanism is used in this case, regardless of whether a network device schedules a unicast service or a multicast broadcast service by using a PDCCH during DRX-on, the network device adds indication information of the unicast service and indication information of the multicast service to an existing wake-up signal, and during DRX-on, the terminal device monitors a PDCCH of the unicast service and/or the multicast broadcast service based on indication information in the existing wake-up signal mechanism. When the terminal device does not need to monitor the unicast service, the terminal device still wakes up and monitors the PDCCH of the unicast service during a DRX-on state. In this case, unnecessary PDCCH monitoring by the terminal device may be caused, causing power consumption of the terminal device.

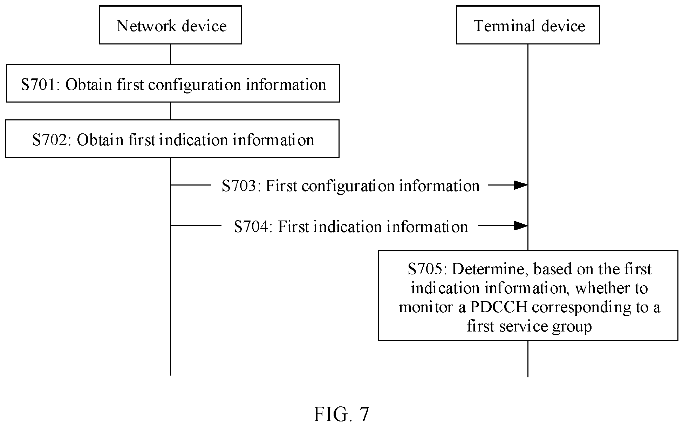

The following specifically describes, with reference to FIG. 7, application of the technical solutions in embodiments of this application in a scenario of a DRX working mechanism.

S701: A network device obtains first configuration information.

The network device may obtain the first configuration information in a plurality of manners. For example, the network device obtains the first configuration information from the network device. Specifically, the network device obtains the first configuration information in manners such as a manner in which the first configuration information is pre-determined by using a protocol, or a manner in which the first configuration information is generated by the network device. For another example, the network device receives the first configuration information from another network device. In this embodiment of this application, the first configuration information may also be referred to as first-type WUS configuration information. In an optional implementation, the first configuration information in this embodiment of this application may be WUS configuration information. For details, refer to the descriptions of the WUS configuration information in FIG. 6. The first-type WUS configuration information is used by a terminal device to receive first indication information based on the first-type WUS configuration information.

S702: The network device obtains first indication information, where the first indication information corresponds to a first service group, the first service group includes at least one first service, and the first service includes a broadcast service and/or a multicast service. In an optional implementation, the first indication information in this embodiment of this application may be WUS indication information. In the WUS mechanism described in FIG. 6, one piece or one group of WUS indication information corresponds to one terminal device, and one or more pieces of first indication information in this embodiment of this application correspond to the first service group.

S702 corresponds to S410. The first service included in the first service group is a broadcast service and/or a multicast service with a similar requirement. Naming of the "first service group" and the "first service" is not limited in this embodiment of this application.

A quantity of the foregoing service groups is not limited in this embodiment of this application. In other words, there may be another service group in this embodiment of this application. A difference between service groups lies in whether services included in each service group are broadcast services and/or multicast services with similar requirements.

S703: The network device sends the first-type WUS configuration information to the terminal device, and correspondingly, the terminal device receives the first-type WUS configuration information from the network device. The terminal device may determine, based on the first-type WUS configuration information, an occasion for monitoring the first indication information, so as to receive the first indication information.

The first-type WUS configuration information may include a first information element, the first information element indicates a time domain position and/or a frequency domain position for monitoring a first message, and the first indication information is included in the first message. Therefore, when the terminal device receives the first-type WUS configuration information, the terminal device may determine, based on the first information element in the first-type WUS configuration information, the time domain position and/or the frequency domain position for monitoring the first message. In this embodiment of this application, the first message may be downlink control information DCI. Specifically, the first message may be in a DCI format 2_X or a DCI format 2_6. Alternatively, the first message may be a media access control control element MAC CE or a radio resource control RRC message. This is not limited in this embodiment of this application, and an implementation form of the first message is not limited. The first message may be a group of signals.

In a possible implementation, the first information element may include at least one of the following: a monitoring time period corresponding to the first service group, a first offset corresponding to the first service group, a start time domain position of the first message, an end time domain position of the first message, a start frequency domain position of the first message, a frequency domain length of the first message, and a start frequency domain position of the first message and an end frequency domain position of the first message. The monitoring time period is used to determine a time length in which the terminal device monitors the first message. The monitoring time period may also be referred to as a monitoring window. A unit of the monitoring window may be monitoring occasion, millisecond, second, slot, symbol, or another time unit. This is not limited in this embodiment of this application. The first offset is used to indicate a time offset of the terminal device before an on-duration timer is started, that is, to indicate a first start position at which the terminal device starts to monitor the first message. In other words, the first offset is used to determine a start time domain position for monitoring

It may be understood that, if the unit of the monitoring window is the monitoring occasion, the monitoring window may be one or more monitoring occasions, and specific time of one monitoring occasion is defined in a protocol.

There are a plurality of manners in which the first information element indicates the time domain position and/or the frequency domain position for monitoring the first message. When the first information element includes different content, the terminal device may determine the time domain position and/or the frequency domain position of the first message in Manner a1 to Manner a4.

Manner a1: The first information element includes a monitoring window and a first offset that correspond to the first service group. It may be understood that the terminal device determines, based on the monitoring time period and the first offset that correspond to the first service group, a time period for monitoring the first message. In other words, the terminal device may monitor the first message in the determined time period. Specifically, the terminal device may determine a first start position of the time period based on the first offset, and determine duration of the time period based on the monitoring window.

Manner a2: The first information element includes a start time domain position and an end time domain position for monitoring the first message. Correspondingly, the terminal device may determine, based on the start time domain position and the end time domain position, a time period for monitoring the first indication information.

Manner a3: The first information element includes a start frequency domain position and a frequency domain length for monitoring the first message. Correspondingly, the terminal device may monitor the first message based on the start frequency domain position and the frequency domain length.

Manner a4: The first information element may include a start frequency domain position and an end frequency domain position for monitoring the first message.

The foregoing plurality of possible implementations may be combined. To be specific, the first information element may indicate the time domain position and the frequency domain position of the first message. For a case in which the first information element indicates the time domain position of the first message, refer to Manner a1 and Manner a2. For a case in which the first information element indicates the frequency domain position of the first message, refer to Manner a3 and Manner a4.

In an optional implementation, the first-type WUS configuration information may further include a second information element, and the second information element indicates a position of the first indication information in the first message. The second information element may include a size of the first message and first position information, or the second information element may include a start position of the first message and second position information. It should be understood that, in addition to the first indication information of the first service group, the first message may further include indication information of another service group. To help the terminal device determine a position of the first indication information corresponding to the first service group in the first message, the second information element in the first-type WUS configuration information may be used to determine the position of the first indication information in the first message.

There are a plurality of manners in which the second information element indicates the position of the first indication information in the first message, and the following provides descriptions with reference to Manner b1 and Manner b2.

Manner b1: The second information element includes a size of the first message and first position information. The size of the first message indicates a load size of the first message. For example, the size of the first message is a quantity of bits of information included in the first message. The first position information indicates a position, in the first message, of an indication information block corresponding to the first service group. Specifically, the first position information may be a start position, in the first message, of the indication information block corresponding to the first service group.

It may be understood that, if the size of the first message is X bits, a value range of the first position information may be from 0 to X-1. In other words, a value of the first position information is any value from 0 to X-1. X is a positive integer greater than 1. For example, the size of the first message is 100 bits, and the first position information indicates that the start position, in the first message, of the indication information block corresponding to the first service group is 5 bits. In this case, the indication information corresponding to the first service group starts from the 5th bit.

Manner b2: The second information element includes a start position of the first message and second position information. The second position information indicates an offset of an indication information block corresponding to the first service group relative to a start position of the first message. Herein, the start position of the first message may be a start boundary of the message (that is, a start position corresponding to the 1 st bit), or an end position corresponding to the 1st bit of the first message.

It may be understood that, if a size of the first message is Y bits, a value range of the second position information may be from 0 to Y-1. Y is a positive integer greater than 1. For example, when the second position information indicates 10, and if the start position of the first message is the start position corresponding to the 1st bit of the message, it may be understood that the indication information block corresponding to the first service group is located at the 10th bit counted from the start position of the first message. For another example, when the second position information indicates 10, and if the start position of the first message is the end position corresponding to the 1st bit of the message, it may be understood that the indication information block corresponding to the first service group is located at the 11th bit counted from the start position of the first message.

As described above, the indication information block corresponding to the first service group may include the first indication information. Optionally, the indication information block may further include a secondary cell sleep indication.

It may be understood that a position of the first indication information in the indication information block corresponding to the first service group is not limited in this embodiment of this application. For example, the first indication information corresponding to the first service group may be indicated by using one bit, and the first indication information corresponding to the first service group may be located in the 1st bit in the information block corresponding to the first service group.

S704: The network device sends the first indication information to the terminal device, and correspondingly, the terminal device receives the first indication information from the network device.

The first indication information corresponds to the first service group. In other words, the first indication information is associated with the first service group. To be specific, the terminal device determines, based on the first indication information, whether to monitor a PDCCH corresponding to the first service group. The first indication information is included in the first message.

The terminal device may determine, based on the first-type WUS configuration information, an occasion for monitoring the first indication information. Specifically, the terminal device may determine, based on the first information element in the first-type WUS configuration information, an occasion for monitoring the first message, and then determine a position of the first indication information in the first message based on the second information element in the first-type WUS configuration information, to receive the first indication information.

S705: The terminal device determines, based on the first indication information, whether to monitor the PDCCH corresponding to the first service group.

For example, the first service group includes one MBS. The first indication information may be indicated by using one bit. When the bit is set to "1", the terminal device is indicated to wake up and monitor a PDCCH corresponding to the MBS during a DRX-on state corresponding to the MBS. In other words, when the terminal device is in an awake state during the DRX-on state, or when the terminal device is in an active state during the DRX-on state, the terminal device monitors the PDCCH corresponding to the MBS. When the bit is set to "0", the terminal device is indicated to be in a sleep state during a DRX-on state corresponding to the MBS, and the terminal device does not monitor a PDCCH corresponding to the MBS. In other words, the terminal device skips monitoring the PDCCH corresponding to the MBS, or the terminal device does not monitor the PDCCH corresponding to the MBS. Alternatively, when the bit is set to "0", the terminal device is indicated to wake up and monitor a PDCCH corresponding to the MBS during a DRX-on state corresponding to the MBS. In other words, when the terminal device is in an awake state during the DRX-on state, or when the terminal device is in an active state during the DRX-on state, the terminal device monitors the PDCCH corresponding to the MBS. When the bit is set to "1", the terminal device is indicated to be in a sleep state during a DRX-on state corresponding to the MBS, and the terminal device does not monitor a PDCCH corresponding to the MBS. In other words, the terminal device skips monitoring the PDCCH corresponding to the MBS, or the terminal device does not monitor the PDCCH corresponding to the MBS. The specific indication value is merely an example. For example, in this embodiment of this application, another indication value may be used to indicate whether to perform wake-up. In addition, a bit position is not limited in this embodiment of this application.

In an optional implementation, if the terminal device receives no first indication information within a time period T or the terminal device receives no first indication information for M consecutive times, the terminal device determines to wake up and monitor the PDCCH of the first service group during a DRX-on state. In this way, a probability that the terminal device misses monitoring the PDCCH corresponding to the first service group can be reduced. It should be noted that, for descriptions of the time period T and/or M, refer to related descriptions in S430. Details are not described herein again.

In an optional implementation, when the terminal device determines to wake up and monitor the PDCCH of the MBS during the DRX-on state corresponding to the MBS, the terminal device needs to determine, based on a DRX parameter corresponding to the MBS, an occasion of starting to monitor the PDCCH corresponding to the MBS. For ease of description, the following first describes a function of the DRX parameter.

Each MBS has its own DRX parameter, and the DRX parameter may further include at least one of the following: a time length (drx-HARQ-RTT-TimerDL) of a first downlink hybrid automatic repeat request round trip time timer HARQ RTT timer, a time length (drx-RetransmissionTimerDL) of a first downlink DRX retransmission timer, a first on-duration timer (onDurationTimerMBS), a first inactivity timer (drx-incativityTimerMBS), a first slot offset (drx-SlotOffset), and a first DRX cycle start offset (schedulingPeriodStartOffsetMBS).

The first on-duration timer and the first inactivity timer are used to determine a parameter for an active state. A unit of the first on-duration timer may be sub-millisecond sub-ms or millisecond ms, and the unit may be indicated by the network device. The time length of the first downlink hybrid automatic repeat request round trip time timer HARQ RTT timer and the time length of the first downlink DRX retransmission timer are used in combination for one HARQ process, and are used by the terminal device to determine an occasion for monitoring retransmission performed by the network device. The first slot offset indicates an occasion of starting the first on-duration timer. The first DRX cycle start offset is used to determine a DRX cycle and a start position of the DRX cycle.

In an optional implementation, that the terminal device wakes up and monitors the PDCCH corresponding to the MBS during the DRX-on state corresponding to the MBS includes: The terminal device determines the start position of the DRX cycle based on the first DRX cycle start offset; and after the start position of the DRX cycle, the terminal device determines, based on the first slot offset, an occasion of starting the first on-duration timer, that is, on the occasion, a start position of the DRX-on state, of starting the first on-duration timer, the terminal device starts to monitor the PDCCH corresponding to the MBS.

Specifically, that the terminal device determines the start position of the DRX-on state may be as follows: if it is determined to use a long DRX cycle and Formula (1) is satisfied, the terminal device may determine the start position of the DRX-on state after a time period that starts from a subframe position satisfying Formula (1), that is, starts from the start position of the DRX cycle, and that passes time corresponding to the first slot offset.

$$[(SFN \times 10) + \text{subframe number}] \, modulo(\text{drx-LongCycle}) = \text{drx-StartOffset} \qquad (1)$$

SFN is a system frame number, subframe number is a subframe number, modulo is a modulo operation, drx-LongCycle is a long DRX cycle, and drx-StartOffset is a first DRX cycle start offset.

In other words, after indication information corresponding to an MBS is received, after a time period that starts from a determined subframe satisfying Formula (1) and that passes time corresponding to the first slot offset, the terminal device determines a start position of a DRX-on state and starts the on-duration timer.

In the technical solutions in embodiments of this application, a WUS mechanism for a broadcast service and/or a multicast service is designed, so that before monitoring a PDCCH corresponding to the broadcast service and/or the multicast service, the terminal device may determine, by using the WUS mechanism, whether to monitor the PDCCH corresponding to the broadcast service and/or the multicast service, thereby reducing power consumption of the terminal device.

The network device may further send second configuration information to the terminal device. The second configuration information may also be referred to as second-type WUS configuration information. Correspondingly, the terminal device receives the second-type WUS configuration information from the network device. The terminal device may determine, based on the second-type WUS configuration information, an occasion for monitoring second indication information, to receive the second indication information. The second indication information corresponds to a second service group, and the second service group may include at least one second service. The second service may be a broadcast service and/or a multicast service, or the second service may be a unicast service. The second-type configuration information includes a third information element and a fourth information element. Content and a function of the second-type configuration information are similar to those of the first-type configuration information. Details are not described herein again.

The network device may send both the first-type WUS configuration information and the second-type WUS configuration information to the terminal device, or may first send the first-type WUS configuration information and then send the second-type WUS configuration information, or may first send the second-type WUS configuration information and then send the first-type WUS configuration information. This is not limited in embodiments of this application.

In an optional implementation, the first-type WUS configuration information and the second-type WUS configuration information may be included in a same configuration message, or may be included in different configuration messages, respectively. The configuration message may be an RRC message or another message that includes the first-type WUS configuration information and/or the second-type WUS configuration information. This is not limited in embodiments of this application.

Embodiments of this application provide the WUS mechanism for the broadcast and/or multicast service. WUS indication information for different MBSs may be included in a same message. When the network device configures different DRX parameters for different MBS services, start positions of DRX-on states that are obtained by the terminal device based on the different DRX parameters may be different. In this case, if power saving offsets in WUS configuration information of the different MBSs are configured the same, the terminal device monitors a WUS for the different MBSs at different start positions. However, the WUS includes WUS indication information of the different MBSs. In other words, the terminal device needs to frequently monitor the same WUS to obtain the WUS indication information for the different MBSs. Consequently, this increases power consumption of the terminal device.

When the second service is a broadcast service and/or a multicast service, the first indication information and the second indication information may be included in a same piece of DCI. In this case, DRX configuration corresponding to the first indication information may be different from DRX configuration corresponding to the second indication information, and a DRX start position corresponding to the first service group may be different from a DRX start position corresponding to the second service group. To enable the two service groups to monitor the DCI at a same position, the network device may configure different power saving offsets for the two service groups, so that the start position that corresponds to the first service group and that is of starting to monitor the first indication information is the same as the start position that corresponds to the second service group and that is of starting to monitor the second indication information. When both the first service and the second service are broadcast services and/or multicast services, a new DCI format may be introduced, for example, a DCI format 2_X. A value of X is not limited in embodiments of this application, and another newly designed DCI name may alternatively be used.

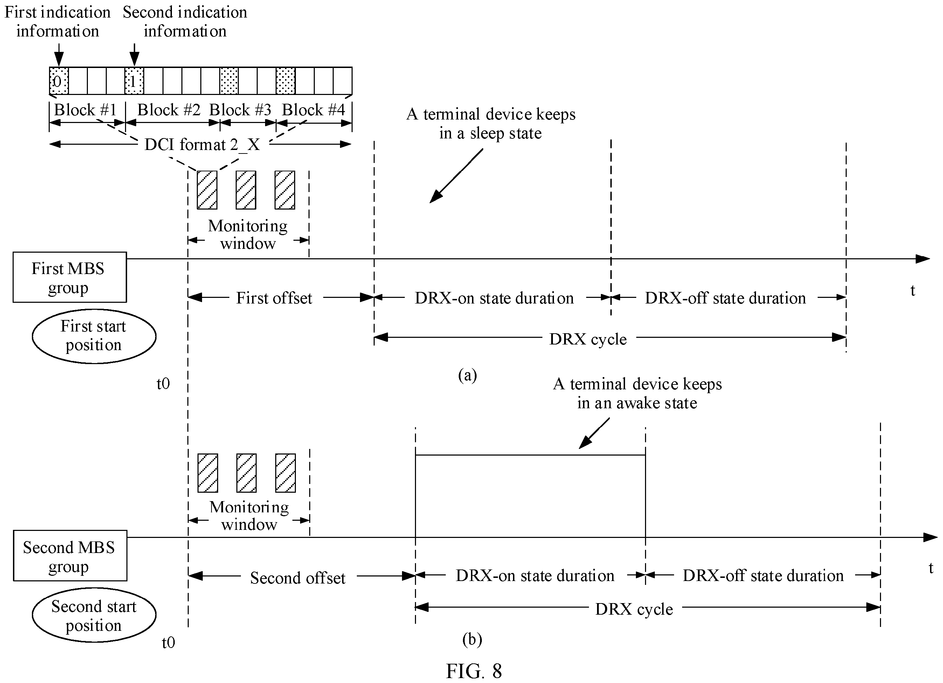

FIG. 8 is a schematic diagram of a scenario in which both a first service and a second service are broadcast services and/or multicast services according to an embodiment of this application. A first MBS group may be a first service group, and a second MBS group may be a second service group. As shown in FIG. 8, indication information corresponding to a plurality of MBS groups may be included in a same first message, that is, included in a same piece of DCI. The plurality of MBS groups include a first MBS group and a second MBS group, and a format of the DCI may be a DCI format 2_X.

(a) in FIG. 8 is a schematic diagram of a scenario in which first indication information corresponding to the first MBS group indicates a terminal device to sleep in a DRX-on state. (b) in FIG. 8 is a schematic diagram of a scenario in which second indication information corresponding to the second MBS group indicates a terminal device to wake up in a DRX-on state.

As shown in (a) in FIG. 8 and (b) in FIG. 8, a horizontal axis represents time t, and indication information corresponding to different MBS groups is included in DCI. A format of the DCI is a DCI format 2_X, the DCI format 2_X includes WUS indication information corresponding to the different MBS groups, and the WUS indication information corresponding to the different MBS groups is in different indication information blocks. As shown in FIG. 8, WUS indication information corresponding to the first MBS group is in a block #1. In other words, the first indication information is in the block #1. WUS indication information corresponding to the second MBS group is in a block #2. In other words, the second indication information is in the block #2. WUS indication information corresponding to a third MBS group is in a block #3, and WUS indication information corresponding to a fourth MBS group is in a block #4.

The terminal device determines, based on a first offset in received first-type WUS configuration information and a second offset in received second-type WUS configuration information, to monitor the DCI at a same time domain position. To be specific, as shown in FIG. 8, a first start position corresponding to the first MBS group is the same as a second start position corresponding to the second MBS group.

The terminal device may determine a position of an indication information block (block #1) of the first MBS group in the DCI based on first position information in a second information element of the first-type WUS configuration information, and determine a position of an indication information block (block #2) of the second MBS group in the DCI based on third position information in a fourth information element of the second-type WUS configuration information. A position of indication information in an indication information block may be predefined. For example, in FIG. 8, the first indication information is located at the 1 $^{st}$ bit in the block #1, and the second indication information is located at the 1$^{st}$ bit in the block #2.

When the 1$^{st}$ bit in the block #1 is set to "0", it indicates that the first indication information indicates the terminal device not to monitor, in a DRX-on state, a PDCCH corresponding to the first MBS group. In other words, the terminal device keeps being in a sleep state from the DRX-on state corresponding to the first MBS group after the DCI, that is, the terminal device skips monitoring the PDCCH in duration of the DRX-on state corresponding to the first MBS group, as shown in (a) in FIG. 8.

When the 1$^{st}$ bit in the block #2 is set to " 1", it indicates that the second indication information indicates the terminal device to monitor, in a DRX-on state, a PDCCH corresponding to the second MBS group. In other words, the terminal device wakes up in the DRX-on state corresponding to the second MBS group and continuously monitors the PDCCH corresponding to the second MBS group, as shown in (b) in FIG. 8.

When the second service is a unicast service, the first indication information and the second indication information are included in a same piece of DCI. In this case, DRX configuration corresponding to the first indication information may be different from DRX configuration corresponding to the second indication information, and a DRX start position corresponding to the first service group may be different from a DRX start position corresponding to the second service group. To enable the two service groups to monitor the DCI at a same position, the network device may configure different power saving offsets for the two service groups, so that the start position that corresponds to the first service group and that is of starting to monitor the first indication information is the same as the start position that corresponds to the second service group and that is of starting to monitor the second indication information. When the first service is a broadcast service and/or a multicast service and the second service is a unicast service, a conventional DCI format, for example, a DCI format 2_6, may be used. The DCI format 2_6 is an improvement made based on the current DCI format shown in FIG. 5.

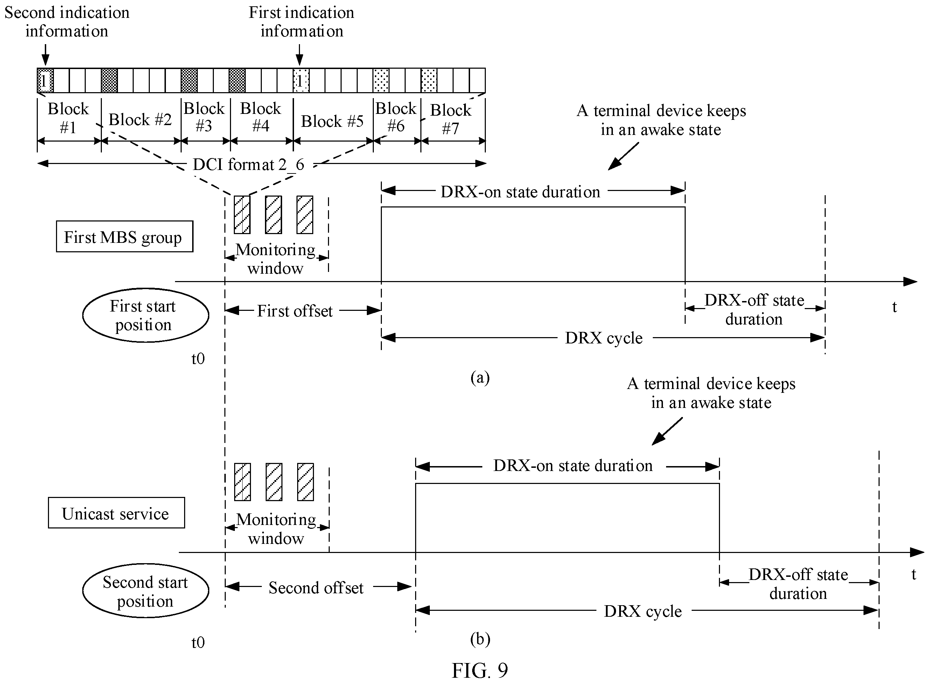

FIG. 9 is a schematic diagram of a scenario in which a first service is a broadcast service and/or a multicast service and a second service is a unicast service according to an embodiment of this application. Herein, a first MBS group may be a first service group, and the unicast service may be a second service in a second service group. As shown in FIG. 9, indication information corresponding to a plurality of MBS groups and indication information corresponding to the unicast service may be included in a same message. For example, first indication information corresponding to the first MBS group and second indication information corresponding to the unicast service may be included in same DCI. The plurality of MBS groups include the first MBS group and a second MBS group. Herein, only the first MBS group is used as an example for description.

(a) in FIG. 9 is a schematic diagram of a scenario in which first indication information corresponding to the first MBS group indicates a terminal device to wake up in a DRX-on state. (b) in FIG. 9 is a schematic diagram of a scenario in which second indication information corresponding to the unicast service indicates a terminal device to wake up in a DRX-on state.

As shown in (a) in FIG. 9 and (b) in FIG. 9, a horizontal axis represents time t, indication information corresponding to different MBS groups and indication information corresponding to a unicast service are included in DCI, and a format of the DCI is an improved DCI format 2_6. The improved DCI format 2_6 includes the indication information corresponding to the different MBS groups and the indication information of the unicast service in different terminal devices. The indication information corresponding to the different MBS groups is in indication information blocks corresponding to the different MBS groups. The indication information blocks corresponding to the different MBS groups are a block #5, a block #6, and a block #7 in FIG. 9, and the indication information of the unicast service in the different terminal devices is a block #1 to a block #4 in FIG. 9.

The terminal device determines, based on a first offset in a first information element of received first-type WUS configuration information and a second offset in a third information element of received second-type WUS configuration information, to monitor the DCI at a same time domain position. To be specific, as shown in FIG. 9, a first start position corresponding to the first MBS group is the same as a second start position corresponding to the unicast service.

The terminal device may determine a position of an indication information block (block #5) of the first MBS group in the DCI based on first position information in a second information element of the first-type WUS configuration information, and determine a position of an indication information block (block #1) of the unicast service in the terminal device in the DCI based on third position information in a fourth information element of the second-type WUS configuration information. A position of indication information in an indication information block may be predefined. For example, in FIG. 9, the first indication information is located at the 1 st bit in the block #5, and the second indication information is located at the 1st bit in the block #1.

When the 1st bit in the block #5 is set to " 1", it indicates that the first indication information indicates the terminal device to monitor, in a DRX-on state, a PDCCH corresponding to the first MBS group. In other words, the terminal device starts to monitor the PDCCH of the first MBS group from a start position of the DRX-on state corresponding to the first MBS group after the DCI, that is, the terminal device monitors the PDCCH in an awake state, as shown in (a) in FIG. 9.

When the 1st bit in the block #1 is set to " 1", it indicates that the second indication information indicates the terminal device to monitor, in a DRX-on state, a PDCCH corresponding to the unicast service, as shown in (b) in FIG. 9. An operation of the terminal device is similar to that of receiving the first indication information indicating the terminal device to monitor, in the DRX-on state, the PDCCH corresponding to the first MBS group. To avoid repetition, details are not described herein again.

The foregoing example of the DCI format is merely an example. When both an MBS and a unicast service exist, or a plurality of MBSs exist, a manner of improving an existing DCI format to obtain indication information in embodiments of this application may be used, for example, the improved DCI format 2_6, or a manner of designing a new DCI format without improving the existing DCI format, for example, the DCI format 2_X.

As described above, in this embodiment of this application, a WUS structure for a wake-up mechanism of the unicast service and the MBS is the DCI format 2_6, which is an improvement on a WUS structure currently used only for a wake-up mechanism of the unicast service. Different indication information is allocated to the first MBS group and the unicast service based on the first-type WUS configuration information and the second-type WUS configuration information, so that the unicast service and the first MBS group share one piece of DCI. According to the method, when the terminal device is interested in both the unicast service and the multicast service, DCI of the unicast and the first MBS group to the terminal device can be sent by using only the DCI format 2_6, thereby reducing signaling overheads of a wake-up signal. In addition, the terminal device can monitor the DCI at a same position, thereby reducing power consumption of the terminal device.

In an optional implementation, when the second service is a unicast service, the first indication information and the second indication information may be included in different messages. The first indication information is included in a first message, and the second indication information is included in a second message. For example, the first indication information and the second indication information are included in different DCI. In a scenario in which the first service is a broadcast service and/or a multicast service and the second service is a unicast service, the first indication information may be included in the DCI shown in FIG. 8, a format of the DCI may be a DCI format 2_6, the second indication information may be included in the DCI shown in FIG. 6, and a format of the DCI may be a DCI format 2_6.

As described above, in embodiments of this application, the terminal device receives a WUS for a unicast service and a WUS for an MBS, so that the terminal device may determine, by using the solutions in embodiments before the terminal device monitors a PDCCH corresponding to the unicast service and a PDCCH corresponding to the MBS without changing an existing WUS mechanism for the unicast service, whether to monitor the PDCCH corresponding to the unicast service and the PDCCH corresponding to the MBS, thereby reducing power consumption of the terminal device.

For the terminal device, if the terminal device is interested in the MBS, the terminal device may monitor the PDCCH based on a group radio network temporary identifier (group radio network temporary identifier, G-RNTI) configured through a network, to obtain MBS data associated with the G-RNTI. Herein, the MBS data may be signaling of the MBS and/or a data packet of the MBS. Generally, an association relationship between a G-RNTI and an MBS is a one-to-one relationship. In other words, a terminal device may directly determine, by monitoring DCI scrambled based on a G-RNTI, whether a network device sends corresponding MBS data. However, if the G-RNTI and the MBS are in a one-to-many association relationship, that is, N MBSs are associated with a same G-RNTI, when the network device sends M pieces of MBS data in the N pieces of MBS data to the terminal device, the network device may multiplex the M pieces of MBS data into one transport block (transport block, TB), and send the transport block to the terminal device through a resource scheduled by using DCI scrambled based on the G-RNTI, where N is a positive integer greater than or equal to 2, M is a positive integer greater than or equal to 1 and less than or equal to N, and the M pieces of MBS data correspond to the same G-RNTI. Specifically, the transport block may include M MBS data packets and M MBS identifiers. The MBS identifiers are in a one-to-one correspondence with the MBS data packets. Optionally, the MBS identifier may be a logical channel identifier (logical channel identity, LCID), or another identifier that can identify the MBS. This is not limited in embodiments.

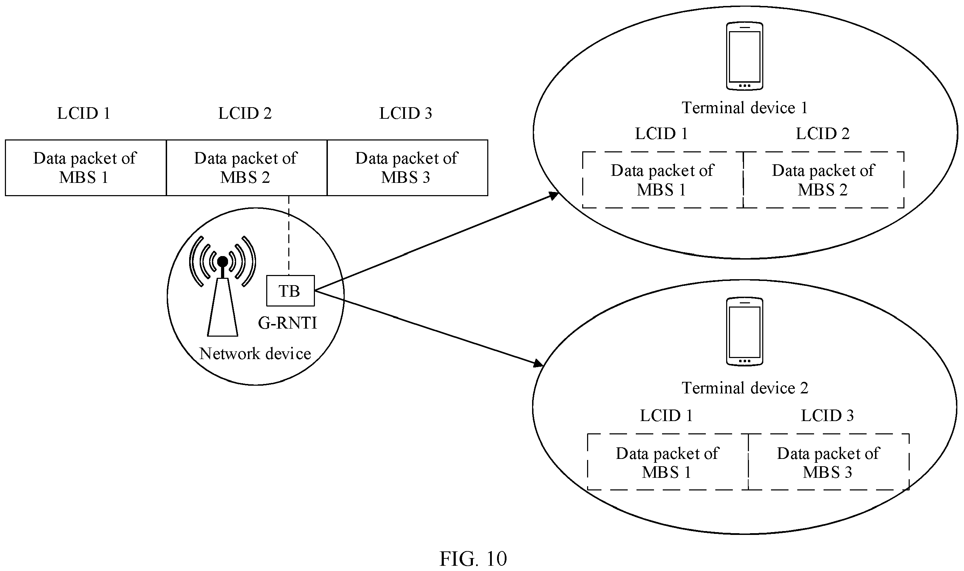

For example, the network device configures an MBS 1, an MBS 2, and an MBS 3 to be associated with a same G-RNTI. As shown in FIG. 10, when the network device needs to send data packets of the three MBSs, the network device may multiplex the data packets of the three MBSs into a same transport block, and carry the transport block on a resource scheduled by using DCI scrambled based on the G-RNTI. For a terminal device 1, although the terminal device 1 is interested in data packets of MBSs corresponding to an LCID 1 and an LCID 2, the terminal device still needs to receive the entire transport block. Similarly, for a terminal device 2, although the terminal device 2 is interested in data packets of MBSs corresponding to the LCID 1 and an LCID 3, the terminal device also needs to receive the entire transport block.

In this case, the terminal device determines, based on the G-RNTI, data of which MBS sent by the network device is uncertain, and the terminal device needs to receive data of an MBS that is not needed by the terminal device. Consequently, unnecessary PDCCH monitoring by the terminal device may be caused, causing power consumption of the terminal device. Therefore, to resolve the foregoing problem, this method provides the following solution. The solution is applicable to all the foregoing embodiments, but is not limited to an application scenario of the foregoing embodiments.

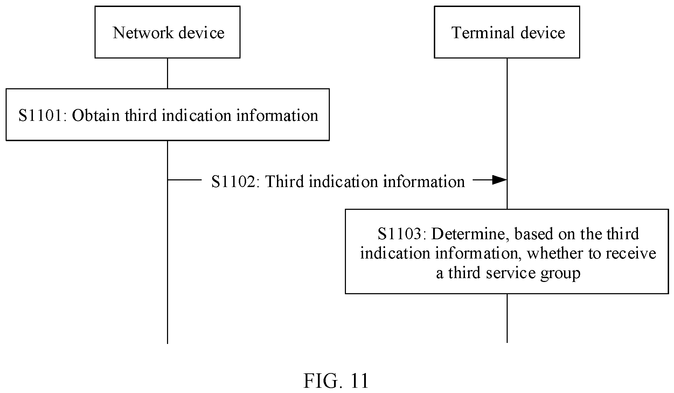

FIG. 11 is a schematic flowchart corresponding to another communication method according to an embodiment of this application;

S1101: A network device obtains third indication information, where the third indication information indicates information about a third service group scheduled by using downlink control information DCI.

It may be understood that this step is optional. The third service group may include at least one third service. The third service may represent a broadcast and/or multicast service, and the broadcast and/or multicast service may also be referred to as a multicast broadcast service MBS.

It may be understood that the third indication information indicates the at least one MBS scheduled by using the DCI. In other words, the third indication information indicates the at least one MBS corresponding to the DCI, that is, the third indication information indicates the at least one MBS associated with the DCI. The third indication information includes information about the at least one MBS, and the information about the at least one MBS includes a session identifier of the at least one MBS or a group identifier of the MBS.

It may be understood that the network device obtains the third indication information in a plurality of manners. In a possible implementation, the network device may determine the third indication information based on assistance information from a core network device. Herein, the assistance information indicates information about a third service group that can be multiplexed into a same transport block, that is, indicates information about the at least one third service that can be multiplexed into a same transport block; or indicates information about a third service group that has a same service attribute, that is, indicates information about the at least one third service that has a same attribute; or indicates an association relationship of a session of the at least one third service. For specific information, refer to descriptions in step 1201. Details are not described herein again.

S1102: The network device sends the third indication information to a terminal device, and correspondingly, the terminal device receives the third indication information from the network device.

The third indication information indicates the information about the third service group scheduled by using the DCI, the third service group includes the at least one third service, and the third service includes a broadcast service and/or a multicast service.

In a possible implementation, the third indication information is included in a third message, and the third message includes downlink control information DCI, a media access control control element MAC CE, a radio resource control RRC message, or another message. This is not limited in embodiments of this application. The following uses an example in which the third message is DCI for description.

S 1103: The terminal device determines, based on the third indication information, whether to receive the third service group.

In a possible implementation, the terminal device indicates, based on the third indication information, whether the information about the third service group scheduled by using the DCI includes an MBS service that the terminal device is interested in, to determine whether to receive the third service group.

In this way, the terminal device learns, based on the third indication information, which MBSs may be scheduled by the network device by using a same G-RNTI, so that the terminal device can determine, before receiving the transport block, whether the transport block includes MBS data that the terminal device is interested in, and determine whether to receive the transport block. Therefore, receiving of unnecessary MBS data by the terminal device is avoided, and power of the terminal device is saved.

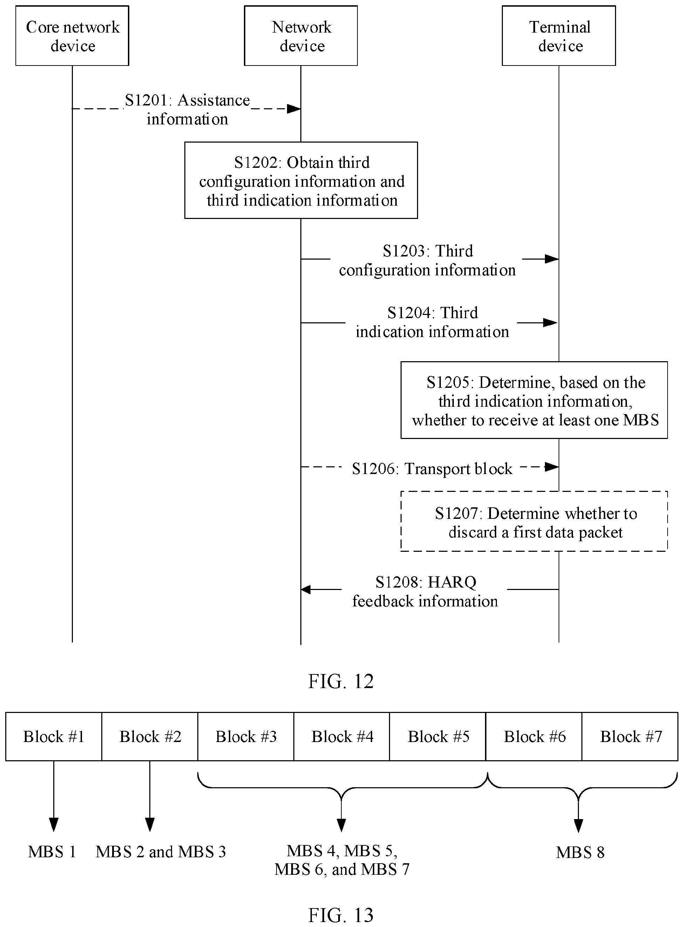

FIG. 12 is a schematic flowchart corresponding to still another communication method according to an embodiment of this application.

Optionally, in S1201, a core network device sends assistance information to a network device, and correspondingly, the network device receives the assistance information sent by the core network device.

It may be understood that the assistance information indicates information about at least one MBS that can be multiplexed into a same transport block, and information about each MBS in the information about the at least one MBS includes an identifier of the MBS and a data packet of the MBS corresponding to the identifier of the MBS. Alternatively, the assistance information may assist the network device in determining which MBSs may use a same G-RNTI.

In a possible implementation, the core network device sends the assistance information to the network device. The network device determines, based on the assistance information, which MBSs are configured for using a same G-RNTI, that is, determines a correspondence between an MBS and a G-RNTI. Then, the network device may send the correspondence to a terminal device. It may be understood that, if it is determined that the correspondence between the MBS and the G-RNTI is a many-to-one correspondence, that is, a plurality of MBSs may correspond to a same G-RNTI, data corresponding to the plurality of MBSs may be multiplexed in one transport block, the transport block may be carried on a physical downlink channel resource, and the physical downlink channel resource may be indicated by using DCI scrambled based on the G-RNTI.

Optionally, before the core network device sends the assistance information to the network device, the core network device obtains the assistance information. In a possible implementation, the core network device groups at least one MBS having a similar requirement into one group.

Optionally, the assistance information indicates information about at least one MBS with a same service attribute. For example, that a plurality of MBSs have similar requirements may be understood as that transmission performance requirements of the plurality of MBSs are similar. For example, the transmission performance may be represented by using one or more of the following performance indicators: delay, reliability, packet error rate, priority, QoS flow identifier (QoS Flow ID, QFI), and the like.

Optionally, the assistance information may include at least one association relationship, and each of the at least one association relationship indicates that a session of the at least one MBS has an association relationship. It may be understood that each association relationship may indicate that the session of the at least one MBS is associated.

For example, as shown in Table 1, the assistance information includes three association relationships: an association relationship 1, an association relationship 2, and an association relationship 3. MBS sessions corresponding to the association relationship 1 include a session of an MBS 1 and a session of an MBS 2; MBS sessions corresponding to the association relationship 2 include a session of an MBS 3 and a session of an MBS 5; and MBS sessions corresponding to the association relationship 3 include a session of an MBS 4, a session of an MBS 6, and a session of an MBS 7.

**Table 1**

| Association relationship | MBS session |
| --- | --- |
| Association relationship 1 | Session of an MBS 1 and session of an MBS 2 |
| Association relationship 2 | Session of an MBS 3 and session of an MBS 5 |
| Association relationship 3 | Session of an MBS 4, session of an MBS 6, and session of an MBS 7 |

It should be noted that the foregoing is merely an example. A table size, data in the table, and an MBS session corresponding to each association relationship in the foregoing table are not limited in embodiments of this application.

S1202: The network device obtains third configuration information and third indication information.

It may be understood that the network device may obtain the third configuration information and the third indication information in a plurality of manners. For example, the network device obtains the third configuration information and the third indication information from the network device. Specifically, the network device obtains the third configuration information and the third indication information in manners such as a manner in which the third configuration information and the third indication information are pre-determined in a protocol, or a manner in which the third configuration information and the third indication information is generated by the network device. For another example, the network device receives the third configuration information and the third indication information from another network device.

S1203: The network device sends the third configuration information to the terminal device, and the terminal device receives the third configuration information.

In an optional implementation, the third configuration information is used to indicate the terminal device to receive a third message, and the third indication information is included in the third message.

The third configuration information includes a fifth information element, a sixth information element, and a ninth information element, where the fifth information element indicates a time domain position and/or a frequency domain position at which the third message is monitored, for example, a control resource set (control resource set, CORESET) and/or search space (search space). Herein, there may be an association relationship between the search space and the CORESET, and the search space and the CORESET associated with the search space may be used to indicate a plurality of candidate time-frequency positions corresponding to the DCI. The sixth information element indicates a position of the third indication information in the third message. The ninth information element indicates a correspondence between an MBS and a G-RNTI.

Optionally, the third configuration information may be sent to the terminal device in a unicast, multicast, or broadcast manner. This is not limited in embodiments of this application.

Optionally, the third configuration information may be included in a radio resource control (radio resource control, RRC) message, a media access control control element (media access control control element, MAC CE), or downlink control information (downlink control information, DCI).

S1204: The network device sends the third indication information to the terminal device, and correspondingly, the terminal device receives the third indication information.

It may be understood that the third indication information indicates information about the at least one MBS scheduled by using the DCI, the third indication information includes an identifier of the at least one MBS, and the identifier may be a session identifier of the MBS or a group identifier of the MBS.

Optionally, there are a plurality of manners in which the third indication information indicates the information about the at least one MBS scheduled by using the DCI. For example, the information may be indicated in an explicit or implicit manner. The following uses Manner X and Manner Y as examples for description.

Manner X: explicit manner

The identifier of the at least one MBS may be included in the third message. In an optional implementation, the identifier of the at least one MBS is included in the DCI, and the DCI may be scrambled based on the G-RNTI.

Manner Y: implicit manner

The identifier of the at least one MBS may be indicated by a time-frequency resource for sending the DCI scrambled based on the G-RNTI. It may be understood that, in this manner, a correspondence between the identifier of the at least one MBS and the time-frequency resource for sending the DCI scrambled based on the G-RNTI may be pre-configured between the terminal device and the network device. Correspondingly, the terminal device may determine, based on the correspondence and the time-frequency resource for sending the DCI scrambled based on the G-RNTI, the identifier of the at least one MBS corresponding to the time-frequency resource. Optionally, the correspondence may be the ninth information element.

FIG. 13 is a schematic diagram of a correspondence between an MBS and an information block in DCI according to an embodiment of this application. As shown in FIG. 13, the DCI includes seven information blocks. Information carried on a block #1 corresponds to an MBS 1, information included in a block #2 corresponds to an MBS 2 and an MBS 3, information included in a block #3, a block #4, and a block #5 corresponds to an MBS 4, an MBS 5, an MBS 6, and an MBS 7, and information included in a block #6 and a block #7 corresponds to an MBS 8.

When a correspondence between an information block and a plurality of MBSs in the DCI is a one-to-many correspondence, because one information block corresponds to the plurality of MBSs, indication information may be sent for a plurality of third services by sending one information block, to avoid sending the indication information for each third service. Therefore, signaling overheads and resource waste can be reduced.

Optionally, a position of the third indication information in the corresponding DCI information block may be preset in a protocol, or may be indicated by the network device. Further, the network device may add, to the third configuration information, information about the position of the third indication information in the corresponding DCI information block. This is not limited in this application.

In this way, if the position of the third indication information in the corresponding DCI information block is preset by using the protocol, bit overheads caused by indicating the corresponding position can be reduced. In addition, if the network device is used to indicate the position of the third indication information in the corresponding DCI information block, information about the indicated position can be more flexible.

S1205: The terminal device determines, based on the third indication information, whether to receive the transport block including data of the at least one MBS.

In a possible implementation, the terminal device determines, based on the third indication information, whether the resource scheduled by using the DCI carries the transport block. The transport block includes the data of the at least one MBS and the identifier of the at least one MBS. If the terminal device is interested in the at least one MBS in the transport block, the terminal device may determine to receive the transport block.

It may be understood that the transport block may be a protocol data unit at a MAC layer, or may be a protocol data unit at a PHY layer, or may be another data unit. This is not limited in embodiments of this application.

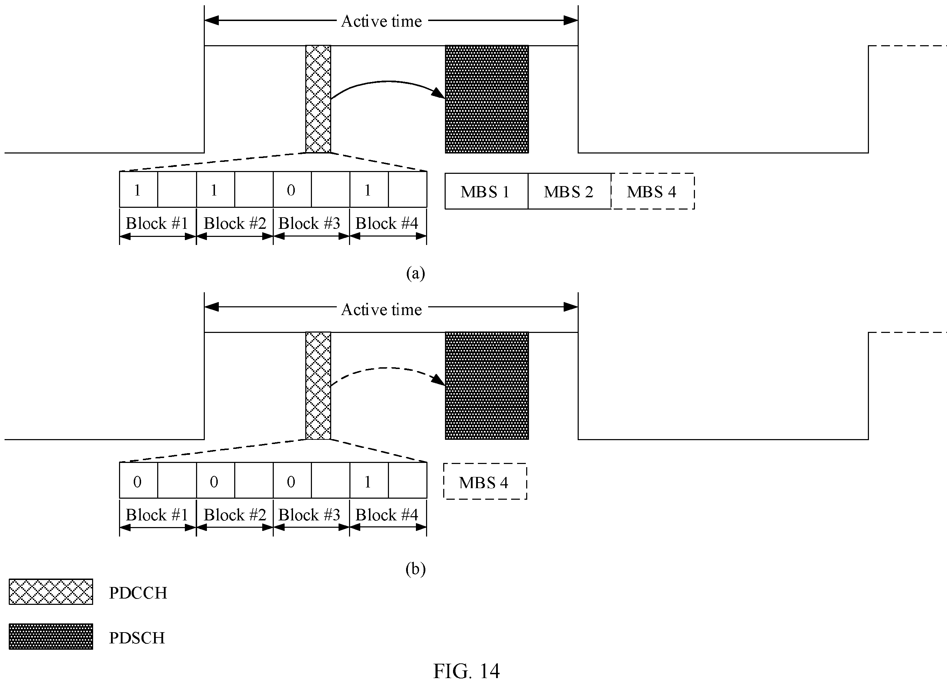

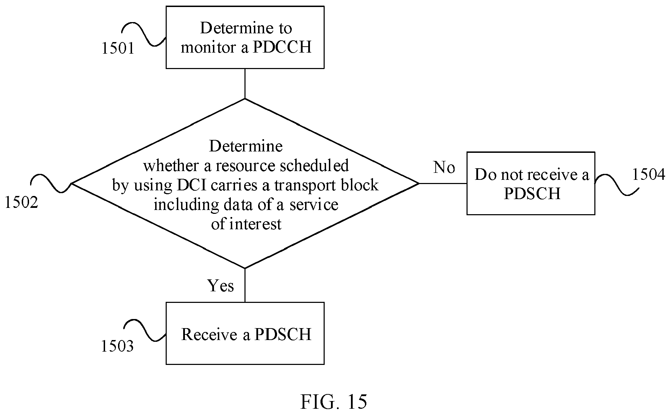

The following describes step S1205 in detail with reference to FIG. 14 and FIG. 15.

The DCI may include a plurality of information blocks, and each information block may correspond to one or more MBSs. Each information block includes third indication information of one or more MBSs corresponding to the information block. Optionally, the 1st bit in each information block is third indication information of one or more MBSs corresponding to the information block.

FIG. 14 is a schematic diagram of receiving MBS data according to an embodiment of this application. Herein, a correspondence between an information block and an MBS in the DCI is a one-to-one correspondence. As shown in (a) in FIG. 14, a block #1 corresponds to an MBS 1, a block #2 corresponds to an MBS 2, a block #3 corresponds to an MBS 3, and a block #4 corresponds to an MBS 4. The 1st bit in each information block is third indication information of an MBS corresponding to the information block. When a value of the 1st bit in each information block is set to "1", it indicates that a PDSCH scheduled by using DCI scrambled based on a G-RNTI carries data of a corresponding MBS. When a value of the 1st bit in each information block is "0", it indicates that a PDSCH scheduled by using DCI scrambled based on a G-RNTI does not carry data of a corresponding MBS.

As shown in (a) in FIG. 14, the 1st bit in the block #1, the 1st bit in the block #2, and the 1st bit in the block #4 are all set to "1", and the 1st bit in the block #3 is set to "0". When monitoring a PDCCH, the terminal device may learn that a PDSCH scheduled by using DCI scrambled based on a G-RNTI carries data corresponding to the MBS 1, the MBS 2, and the MBS 4. According to the foregoing method, if the terminal device is interested in the MBS 1 and the MBS 2, the terminal device determines to receive the transport block; or if the terminal device is interested in the MBS 3, the terminal device determines not to receive the transport block.

As shown in (b) in FIG. 14, the 1st bit in the block #1, the 1st bit in the block #2, and the 1st bit in the block #3 are all set to "0", and the 1st bit in the block #3 is set to "1". When monitoring a PDCCH, the terminal device may learn that a PDSCH scheduled by using DCI scrambled based on a G-RNTI carries data corresponding to the MBS 4. According to the foregoing method, if the terminal device is interested in the MBS 4, the terminal device determines to receive the transport block, or if the terminal device is not interested in the MBS 4, the terminal device determines not to receive the transport block.

The following specifically describes an MBS data receiving procedure with reference to FIG. 15. FIG. 15 is a schematic flowchart of receiving MBS data according to an embodiment of this application.

S1501: A terminal device determines to monitor a PDCCH.

S1502: The terminal device determines, based on third indication information, whether a transport block is sent on a physical downlink shared channel (physical downlink shared channel, PDSCH) resource indicated by DCI carried on the monitored PDCCH, and determines whether the transport block includes data of an MBS that the terminal device is interested in.

S1503: If the terminal device determines that the transport block is sent on the PDSCH resource indicated by the DCI carried on the monitored PDCCH, and if the transport block includes the MBS that the terminal device is interested in, the terminal device determines to receive the transport block on the PDSCH, as shown in (a) in FIG. 14.

S 1504: If the terminal device determines that the transport block is sent on the PDSCH resource indicated by the DCI carried on the monitored PDCCH, and if the transport block does not include the MBS that the terminal device is interested in, the terminal device determines not to receive the transport block on the PDSCH, as shown in (b) in FIG. 14.

The terminal device learns, based on third configuration information and the third indication information, whether the PDSCH resource indicated by the DCI scrambled based on the G-RNTI carries data of a plurality of MBSs, and the terminal device chooses to receive the data of the MBS that the terminal device is interested in. In this way, receiving of unnecessary MBS data is avoided, and power is saved.

S1206: The network device sends the transport block, and if the terminal device determines to receive the transport block, the terminal device receives the transport block.

It may be understood that the transport block may be scrambled based on a G-RNTI or carried on a transport channel corresponding to an MBS, the transport block includes one or more first data packets, and each first data packet includes a data packet of the at least one MBS.

Optionally, in S1207, if an MBS corresponding to the first data packet is not the MBS that the terminal device is interested in, in other words, if the first data packet includes a data packet of an MBS that the terminal device is not interested in, the first data packet is discarded; or a transport block including the first data packet is discarded.

In an optional implementation, a method for the terminal device to determine to discard the first data packet may include: The terminal device determines, based on identifier information in the first data packet of a corresponding MBS, for example, an LCID, whether to discard the first data packet. Herein, the first data packet may also be referred to as a sub-data packet. If the terminal device is interested in the MBS corresponding to the LCID, the terminal device receives the sub-data packet of the MBS corresponding to the LCID; or if the terminal device is not interested in the MBS corresponding to the LCID, the terminal device discards the sub-data packet of the MBS corresponding to the LCID.

In this way, the terminal device may choose to receive or discard a sub-data packet of each MBS in a media access control protocol data unit (media access control protocol data unit, MAC PDU), to further avoid receiving unnecessary MBS data. This saves power of the terminal device, and avoids fuzzy behavior of the terminal device.

S1208: The terminal device sends HARQ feedback information, and correspondingly, the network device receives the HARQ feedback information.

It may be understood that, if the transport block received by the terminal device does not include a data packet of a service that the terminal device is interested in, the terminal device feeds back a hybrid automatic repeat request-acknowledgment (hybrid automatic repeat-acknowledgment, HARQ-ACK); or if the transport block includes a data packet of a service that the terminal device is interested in, the terminal device may perform HARQ feedback based on a decoding status of the transport block.

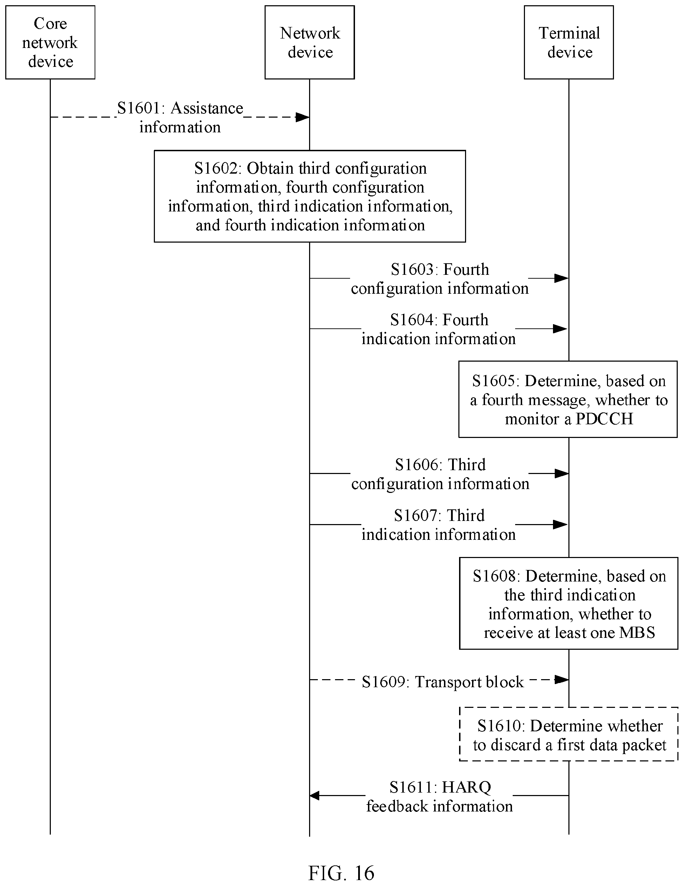

FIG. 16 is a schematic flowchart corresponding to yet another communication method according to an embodiment of this application.

Optionally, in S1601, a core network device sends assistance information to a network device, and correspondingly, the network device receives the assistance information sent by the core network device.

It should be noted that, for related descriptions of the assistance information in S1601, refer to related descriptions in S1201. Details are not described herein again.

S1602: The network device obtains third configuration information, fourth configuration information, third indication information, and fourth indication information.

Optionally, the network device may obtain the third configuration information, the fourth configuration information, the third indication information, and the fourth indication information in a plurality of manners. For example, the network device obtains the information from the network device. Specifically, the network device obtains one or more of the third configuration information, the fourth configuration information, the third indication information, and the fourth indication information in a manner such as a manner in which the information is pre-determined in a protocol or a manner in which the information is generated by the network device. For another example, the network device receives one or more of third configuration information, fourth configuration information, third indication information, and fourth indication information from another network device.

Optionally, a fourth message may be a physical signal, a media access control control element MAC CE, or an RRC message. This is not limited in this application.

Further, when the fourth message is a physical signal, the physical signal may be before a time domain resource corresponding to a PDCCH, that is, the physical signal may be received before the PDCCH is received.

The fourth configuration information is used to indicate a terminal device to receive the fourth message, the fourth message includes one or more pieces of fourth indication information, and the fourth indication information indicates whether the PDCCH carries DCI for scheduling at least one MBS.

It should be noted that for related descriptions of the third configuration information and the third indication information in S 1602, refer to related descriptions in S 1202. Details are not described herein again.

S1603: The network device sends the fourth configuration information to the terminal device, and correspondingly, the terminal device receives the fourth configuration information from the network device.

The fourth configuration information includes a seventh information element and an eighth information element. The seventh information element indicates a time domain position and/or a frequency domain position for monitoring the fourth message, for example, a control resource set CORESET and/or search space (search space). Herein, there may be an association relationship between the search space and the CORESET. The search space and the CORESET associated with the search space may be used to indicate a plurality of candidate time-frequency positions corresponding to the DCI. The eighth information element indicates a position of the fourth indication information in the fourth message.

Optionally, the fourth configuration information may be sent to the terminal device in a unicast, multicast, or broadcast manner. This is not limited in embodiments of this application.

Optionally, the fourth configuration information may be included in a radio resource control RRC message, a media access control control element MAC CE, or downlink control information DCI.

S1604: The network device sends the fourth indication information to the terminal device, and correspondingly, the terminal device receives the fourth indication information.

It may be understood that, the fourth indication information indicates whether the PDCCH carries the DCI for scheduling the at least one MBS, that is, the fourth indication information indicates whether an MBS or another service other than the MBS, for example, a unicast service, is scheduled by using the DCI. In other words, the fourth indication information indicates whether a PDCCH in a next period of time (for example, N PDCCH occasions) carries the DCI for scheduling the MBS.

S1605: The terminal device determines, based on the fourth indication information, whether to monitor the PDCCH, where the fourth indication information is included in the fourth message.

The fourth indication information is included in the fourth message. If the fourth indication information indicates that the PDCCH carries the DCI for scheduling the at least one MBS, the terminal device may monitor the PDCCH based on the physical signal, and receive the DCI. If the fourth indication information indicates that the PDCCH does not carry the DCI for scheduling the at least one MBS, the terminal device does not monitor the PDCCH based on the physical signal.

For example, when a bit of the fourth indication information in the fourth message is set to "1", the terminal device determines that there is DCI for the MBS on the PDCCH of the N PDCCH occasions, and the terminal device monitors the PDCCH of the N PDCCH occasions. When a bit of the fourth indication information in the fourth message is set to "0", the terminal device determines that there is no DCI for the MBS on the PDCCH of the N PDCCH occasions, and the terminal device does not monitor the PDCCH of the N PDCCH occasions.

Alternatively, when a bit of the fourth indication information in the fourth message is set to "0", the terminal device determines that there is DCI for the MBS on the PDCCH of the N PDCCH occasions, and the terminal device monitors the PDCCH of the N PDCCH occasions. When a bit of the fourth indication information in the fourth message is set to "1", the terminal device determines that there is no DCI for the MBS on the PDCCH of the N PDCCH occasions, and the terminal device does not monitor the PDCCH of the N PDCCH occasions. A bit value corresponding to the fourth indication information is not limited in embodiments of this application.

In a possible implementation, the PDCCH monitored by the terminal device may be a period of time, for example, N PDCCH occasions, where N is a positive integer.

Optionally, N in the N PDCCH occasions may be preset in a protocol, or may be configured by the network device by using higher layer signaling. This is not limited in embodiments of this application.

Further, the higher layer signaling herein may be an RRC message, a MAC CE, or DCI.

In this way, before monitoring the PDCCH, the terminal device may determine, based on the fourth indication information, whether the PDCCH carries the DCI for scheduling the at least one MBS. Therefore, before receiving a transport block including a data packet of the MBS, the terminal device may determine whether to monitor the PDCCH. This helps the terminal device further reduce power consumption.

S1606 to S1611 are the same as S1203 to S1208. To avoid repetition, details are not described herein again. For detailed steps of S1606 to S1611, refer to S1203 to S1208.

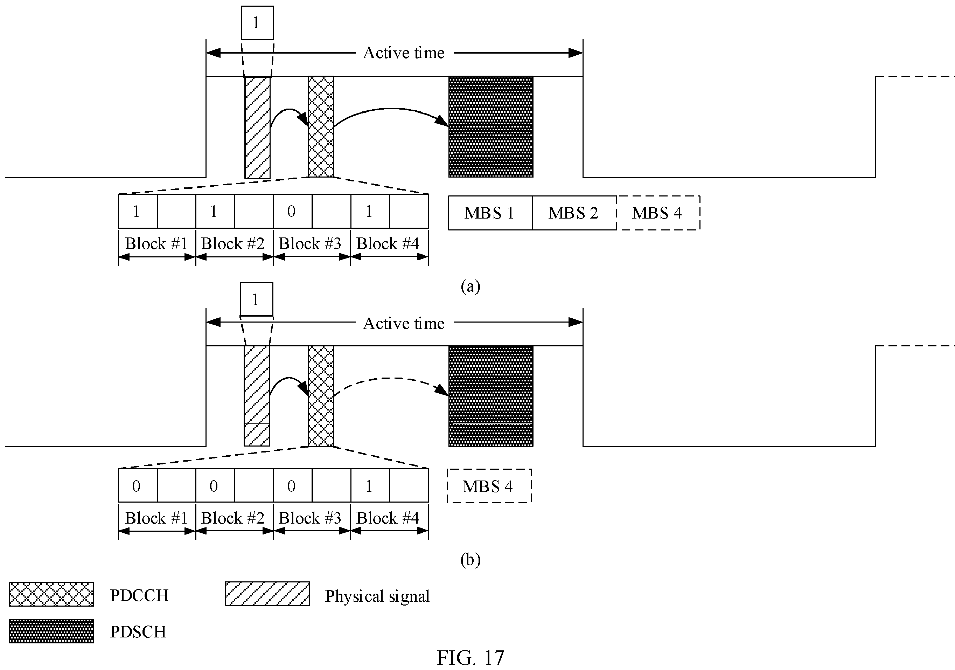

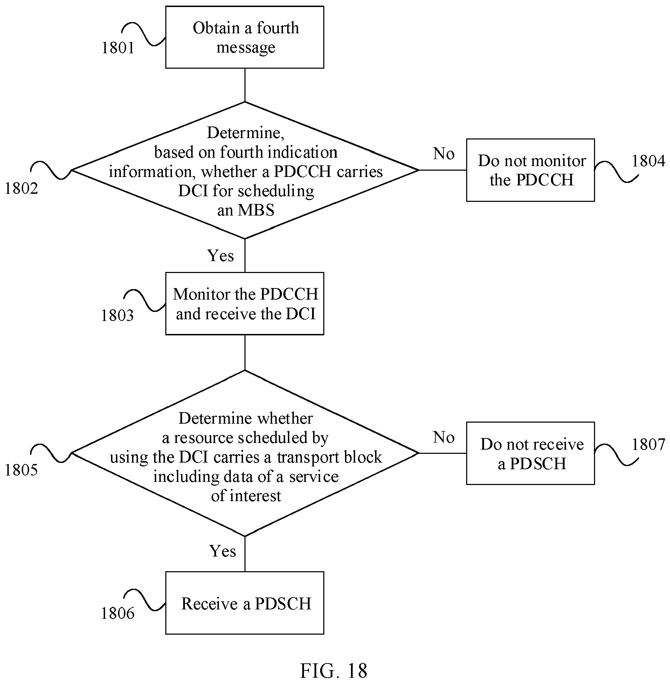

The following describes steps S1605 and S1608 in detail with reference to FIG. 17 and FIG. 18.

FIG. 17 is another schematic diagram of receiving MBS data according to an embodiment of this application.

In FIG. 17, a correspondence between information blocks in DCI on a PDCCH and a plurality of MBSs is a one-to-one correspondence. As shown in FIG. 17, a block #1 corresponds to an information block of an MBS 1. The 1st bit in the block #1 corresponds to fourth indication information of the MBS 1. The fourth indication information indicates whether a PDSCH scheduled by using DCI scrambled based on a G-RNTI carries a transport block, where the transport block includes a data packet of the MBS 1.

When a bit of the fourth indication information in a fourth message is set to "1", the terminal device determines, based on the fourth indication information, that a PDCCH sent of N PDCCH occasions carries DCI for an MBS, so that the terminal device monitors the PDCCH based on the N PDCCH occasions.

In (a) in FIG. 17 and (b) in FIG. 17, the terminal device determines, based on the fourth indication information, that the PDCCH of the N PDCCH occasions carries the DCI for the MBS. Then, the terminal device monitors the N PDCCH occasions, and the terminal device determines, based on the third indication information included in the received DCI, whether to receive a transport block of the corresponding MBS. A specific process is described as shown in (a) in FIG. 14 and (b) in FIG. 14, and details are not described herein again.

The following specifically describes an MBS data receiving procedure with reference to FIG. 18. FIG. 18 is another schematic flowchart of receiving MBS data according to an embodiment of this application.

S1801: A terminal device obtains a fourth message sent by a network device, where the fourth message includes fourth indication information.

Optionally, the fourth message may be a physical signal, an RRC message, a MAC CE, or DCI.

S1802: The terminal device determines, based on the fourth indication information, that a PDCCH carries DCI for scheduling an MBS.

S1803: If the terminal device determines that the MBS is scheduled by using the DCI sent on the PDCCH, the terminal device determines to monitor the PDCCH, as shown in (a) in FIG. 17 and (b) in FIG. 17.

S1804: If the terminal device determines that the MBS is not scheduled by using the DCI sent on the PDCCH, the terminal device determines not to monitor the PDCCH.

S1805: The terminal device determines, based on the fourth indication information, whether a resource scheduled by using DCI on the monitored PDCCH carries a transport block, and determines whether the transport block includes data of a service of interest.

S1806: If the terminal device determines that the resource scheduled by using the DCI on the monitored PDCCH carries the transport block, where the transport block includes an MBS that the terminal device is interested in, the terminal device determines to receive the transport block of a PDSCH, as shown in (a) in FIG. 17.

S1807: If the terminal device determines that the resource scheduled by using the DCI on the monitored PDCCH carries the transport block, where the transport block does not include an MBS that the terminal device is interested in, the terminal device determines not to receive the transport block of a PDSCH, as shown in (b) in FIG. 17.

In this way, before monitoring the PDCCH, the terminal device may determine, based on the fourth indication information, whether the PDCCH carries the DCI for scheduling the MBS, so that the terminal device determines in advance whether to monitor the PDCCH. This further helps the terminal device reduce power consumption. In addition, the terminal device determines whether the MBS scheduled by using the DCI sent on the monitored PDCCH is an MBS that the terminal device is interested in, so that fuzzy behavior of the terminal device can be avoided.

An embodiment of this application further provides a communication method. A schematic flowchart of the communication method is the same as that in FIG. 12. Different from the method in FIG. 12 in which the third indication information is included in the third message, in this communication method, the third indication information is included in the fourth message. Optionally, the fourth message may be a physical signal, a media access control control element MAC CE, or an RRC message. This is not limited in this application.

Further, when the fourth message is a physical signal, the physical signal may be before a time domain resource corresponding to the PDCCH, that is, the physical signal may be received before the PDCCH is received.

The third configuration information shown in FIG. 12 includes a fifth information element, a sixth information element, and a ninth information element. The third configuration information in the communication method includes a seventh information element and an eighth information element. The seventh information element indicates a time domain position and/or a frequency domain position for monitoring the fourth message, for example, a control resource set CORESET and/or search space (search space). Herein, there may be an association relationship between the search space and the CORESET. The search space and the CORESET associated with the search space may be used to indicate a plurality of candidate time-frequency positions corresponding to the DCI. The eighth information element indicates a position of the third indication information in the fourth message.

In the communication method herein, the terminal device may determine, based on the third indication information, whether to monitor the PDCCH, and determine whether a PDSCH resource scheduled by using the DCI on the PDCCH carries a transport block, where the transport block includes an identifier of at least one MBS and a data packet of the at least one MBS.

For example, when a bit of third indication information of an MBS is set to "1", the terminal device determines that there is DCI for the MBS on a PDCCH of N PDCCH occasions, and determines that a PDSCH resource scheduled by using the DCI carries a transport block, where the transport block includes a data packet of the MBS. The terminal device determines whether the MBS is a service that the terminal device is interested in. If the MBS is an MBS that the terminal device is interested in, the terminal device monitors the PDCCH corresponding to the N PDCCH occasions, and receives the transport block on the PDSCH. If the MBS is an MBS that the terminal device is not interested in, the terminal device does not monitor the PDCCH corresponding to the N PDCCH occasions.

When a bit of third indication information of an MBS is set to "0", the terminal device determines that there is no DCI for the MBS on a PDCCH corresponding to N PDCCH occasions, and the terminal device does not monitor the PDCCH corresponding to the N PDCCH occasions. A bit value of the third indication information is not limited in embodiments of this application.

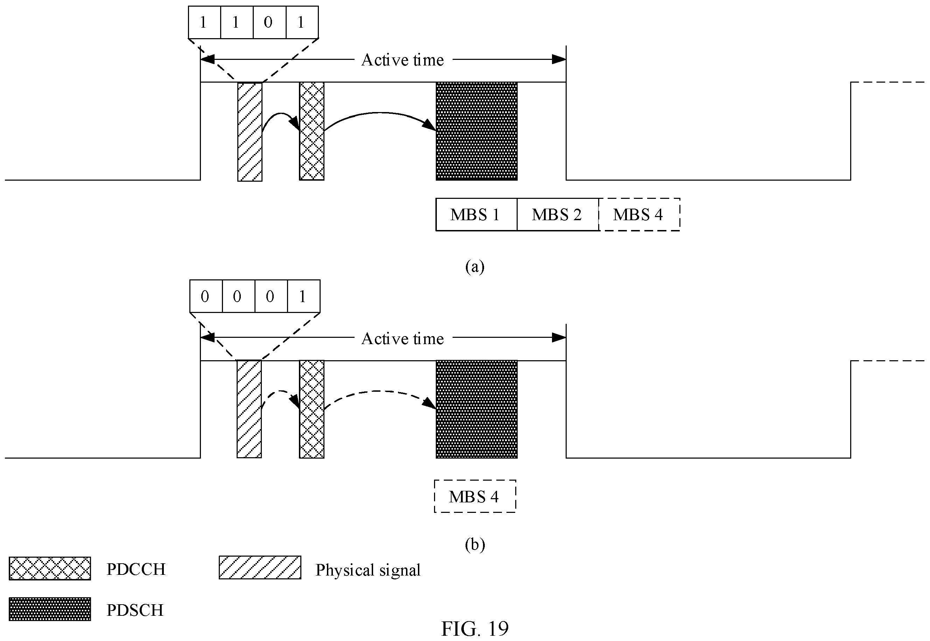

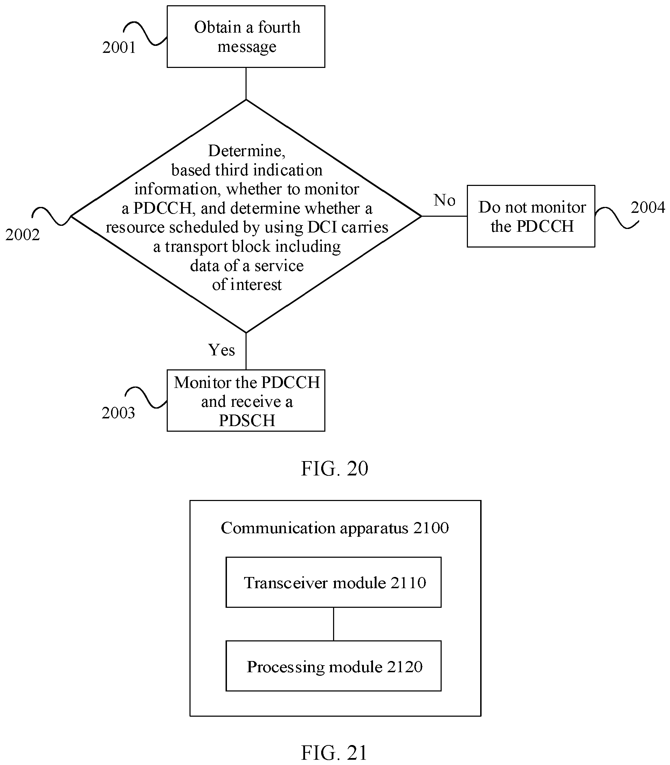

With reference to FIG. 19 and FIG. 20, the following describes in detail whether the terminal device determines, based on the third indication information, whether to monitor a PDCCH, and whether a resource scheduled by using DCI on the PDCCH carries a transport block.

FIG. 19 is still another schematic diagram receiving MBS data according to an embodiment of this application. Herein, when the fourth message is a physical signal, as shown in (a) in FIG. 19, the physical signal includes bits of information blocks corresponding to four MBSs, and a bit of an information block corresponding to each MBS is third indication information corresponding to each MBS. When a value of the bit corresponding to the MBS is set to " 1", it indicates that there is DCI for the MBS on a PDCCH sent on N PDCCH occasions and a PDSCH scheduled by using the DCI carries a transport block including a data packet of the MBS. When a value of the bit corresponding to the MBS is set to "0", it indicates that there is DCI for the MBS on a PDCCH sent on N PDCCH occasions and a PDSCH scheduled by using the DCI carries a transport block not including a data packet of the MBS.

As shown in (a) in FIG. 19, when bits of third indication information in information blocks corresponding to an MBS 1, an MBS 2, and an MBS 4 is set to " 1", the terminal device determines that there is DCI for the MBS 1, the MBS 2, and the MBS 4 on a PDCCH sent on N PDCCH occasions. If the terminal device is interested in the MBS 1 and the MBS 2, the terminal device monitors the N PDCCH occasions, and the terminal device may determine, based on the third indication information, that a PDSCH scheduled by using the DCI carries a transport block including data packets of the MBS 1, the MBS 2, and the MBS 4. In this way, the terminal device further determines to receive the transport block.

As shown in (b) in FIG. 19, when a bit of third indication information in an information block corresponding to an MBS 4 is set to " 1", the terminal device determines that there is DCI for the MBS 4 on a PDCCH sent on N PDCCH occasions. If the terminal device is not interested in the MBS 4, the terminal device does not monitor the N PDCCH occasions, and the terminal device also determines not to receive a transport block that includes data of the MBS4 and that is on a PDSCH scheduled by using the DCI on the PDCCH sent on the N PDCCH occasions.

The following specifically describes an MBS data receiving procedure with reference to FIG. 20. FIG. 20 is still another schematic flowchart of receiving MBS data according to an embodiment of this application.

S2001: A terminal device obtains a fourth message sent by a network device, where the fourth message includes third indication information.

Optionally, the fourth message may be a physical signal, an RRC message, a MAC CE, or DCI.

It may be understood that the physical signal in S2001 is different from the physical signal in S1401, the physical signal in S2101 is an optimized physical signal, and the third indication information in the optimized physical signal indicates whether a PDCCH on N PDCCH occasions of the terminal device carries DCI for scheduling an MBS, as shown in (a) in FIG. 19 and (b) in FIG. 19.

S2002: The terminal device determines, based on the third indication information, whether to monitor a PDCCH, and determines whether a resource scheduled by using DCI on the PDCCH carries a transport block of a service of interest.

S2003: If the terminal device determines that the transport block carried on the resource scheduled by using the DCI includes an MBS that the terminal device is interested in, the terminal device determines to monitor the PDCCH, and receives the transport block on a PDSCH, as shown in (a) in FIG. 19.

S2004: If the terminal device determines that the transport block carried on the resource scheduled by using the DCI does not include an MBS that the terminal device is interested in, the terminal device determines not to monitor the PDCCH, as shown in (b) in FIG. 19.

It should be noted that the optimized physical signal can improve fine granularity of indication information in the physical signal, and does not need to determine, based on DCI carried on the PDCCH, MBS information carried by the PDSCH scheduled by using the DCI. The terminal device may determine, in advance based on the physical signal before the PDCCH, whether the MBS scheduled by using the DCI is an MBS that the terminal device is interested in, so as to determine whether to monitor the PDCCH and/or receive the PDSCH scheduled by using the DCI carried on the PDCCH. Therefore, power consumption of the terminal device can be further reduced.

In an optional implementation, the communication method in FIG. 11 may be implemented based on the communication method in FIG. 4. To be specific, when receiving multicast data, the terminal device first determines, by using a wake-up mechanism for a broadcast service and/or a multicast service, whether to monitor to a PDCCH corresponding to the broadcast service and/or the multicast service, and then the terminal device determines, by using the communication method in FIG. 11, to receive the multicast data. When the terminal device receives the multicast data, power consumption is reduced.

The following should be noted. (1) Embodiments corresponding to FIG. 4, FIG. 7, FIG. 11, FIG. 12, and FIG. 16 may be separately implemented, or may be combined with each other; or different solutions in different embodiments may be combined for implementation (for example, all or some solutions in FIG. 7 may be combined with the embodiment corresponding to FIG. 11). This is not specifically limited. (2) Step numbers in the flowcharts (for example, FIG. 4, FIG. 7, FIG. 11, FIG. 12, and FIG. 16) described in embodiments of this application are merely examples of execution procedures, and do not constitute a limitation on execution sequences of the steps. In embodiments of this application, there is no strict execution sequence between steps that have no time sequence dependency relationship with each other.

The foregoing describes in detail the communication method embodiments of this application with reference to FIG. 1 to FIG. 20. The following describes apparatus embodiments of this application with reference to FIG. 21 to FIG. 24. For detailed descriptions, refer to the foregoing method embodiments.

FIG. 21 is a schematic diagram of a communication apparatus according to an embodiment of this application. As shown in FIG. 21, the communication apparatus 2100 includes a transceiver module 2110 and a processing module 2120.

In a possible design, the communication apparatus 2100 corresponds to the terminal device in the method embodiments shown in FIG. 6 to FIG. 9, for example, may be a terminal device or a chip configured in the terminal device.

Specifically, the transceiver module 2110 is configured to receive first indication information, where the first indication information corresponds to a first service group, the first service group includes at least one first service, and the first service includes a broadcast service and/or a multicast service; and the processing module 2120 is configured to determine, based on the first indication information, whether to monitor a physical downlink control channel PDCCH corresponding to the first service group.

It may be understood that the modules in the communication apparatus 2100 are separately configured to perform actions or processing processes performed by the communication apparatus 2100 in the foregoing methods. Therefore, beneficial effect in the foregoing method embodiments can also be implemented. To avoid repetition, details are not described herein again.

In a possible design, the communication apparatus 2100 corresponds to the network device in the method embodiments shown in FIG. 6 to FIG. 9, for example, may be a network device or a chip configured in the network device.

Specifically, the processing module 2120 is configured to obtain first indication information, where the first indication information corresponds to a first service group, the first service group includes at least one first service, and the first service includes a broadcast service and/or a multicast service; and the transceiver module 2110 is configured to send the first indication information.

It may be understood that the modules in the communication apparatus 2100 are separately configured to perform actions or processing processes performed by the communication apparatus 2100 in the foregoing methods. Therefore, beneficial effect in the foregoing method embodiments can also be implemented. To avoid repetition, details are not described herein again.

In a possible design, the communication apparatus 2100 corresponds to the terminal device in the method embodiments shown in FIG. 11 to FIG. 21, for example, may be a terminal device or a chip configured in the terminal device.

Specifically, the transceiver module 2110 is configured to receive third indication information, where the third indication information indicates a third service group scheduled by using downlink control information DCI, the third service group includes at least one third service, and the third service includes a broadcast service and/or a multicast service; and the processing module 2120 is configured to determine, based on the third indication information, whether to receive the third service group.

It may be understood that the modules in the communication apparatus 2100 are separately configured to perform actions or processing processes performed by the communication apparatus 2100 in the foregoing methods. Therefore, beneficial effect in the foregoing method embodiments can also be implemented. To avoid repetition, details are not described herein again.

In a possible design, the communication apparatus 2100 corresponds to the network device in the method embodiments shown in FIG. 11 to FIG. 21, for example, may be a network device or a chip configured in the network device.

Specifically, the processing module 2120 is configured to obtain third indication information, where the third indication information indicates a third service group scheduled by using downlink control information DCI, the third service group includes at least one third service, and the third service includes a broadcast service and/or a multicast service; and the transceiver module 2110 is configured to send the third indication information.

It may be understood that the modules in the communication apparatus 2100 are separately configured to perform actions or processing processes performed by the communication apparatus 2100 in the foregoing methods. Therefore, beneficial effect in the foregoing method embodiments can also be implemented. To avoid repetition, details are not described herein again.

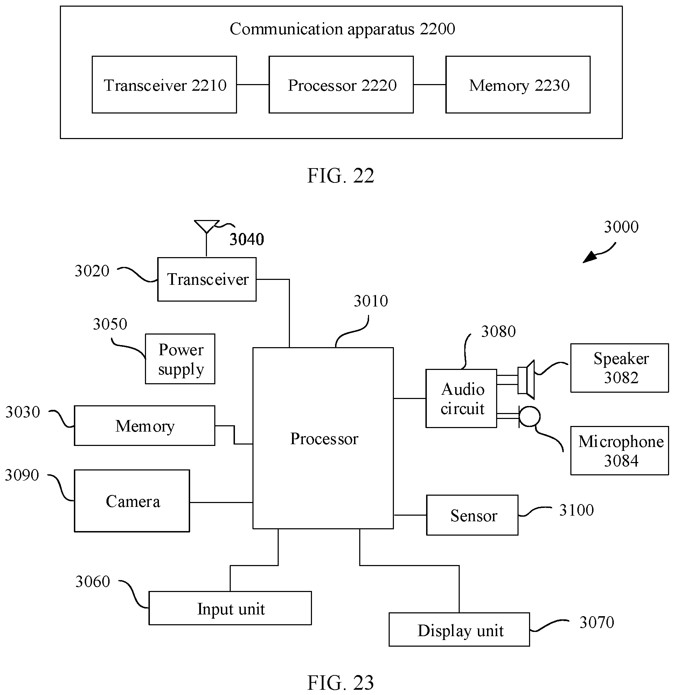

In an optional embodiment, FIG. 22 is a schematic diagram of another communication apparatus according to an embodiment of this application. The communication apparatus 2200 includes a transceiver 2210, a processor 2220, and a memory 2230. Details are shown in FIG. 22.

The communication apparatus 2200 may be configured to perform processes related to the terminal device in the method embodiments shown in FIG. 6 to FIG. 9. The transceiver 2210 corresponds to the transceiver module 2110, and the processor 2220 corresponds to the processing module 2120.

The communication apparatus 2200 may be configured to perform processes related to the network device in the method embodiments shown in FIG. 6 to FIG. 9.

The communication apparatus 2200 may be configured to perform the processes related to the terminal device in the method embodiments shown in FIG. 11 to FIG. 20.

The communication apparatus 2200 may be configured to perform the processes related to the network device in the method embodiments shown in FIG. 11 to FIG. 20.

Specifically, the processor 2220 is connected to the memory 2230. The processor 2220, the transceiver 2210, and the memory 2230 communicate with each other by using an internal connection path, to transfer a control and/or data signal.

The transceiver 2210 may be an antenna or control circuit with sending and receiving functions, and the transceiver 2210 may include a receiver for receiving data and a transmitter for sending data. The memory 2230 may be configured to store instructions. The processor 2220 is configured to execute the instructions stored in the memory 2230, and control the transceiver 2210 to receive and send information or a signal. When executing the instructions in the memory 2230, the processor 2220 can complete processes related to the communication apparatus in the foregoing method embodiments. To avoid repetition, details are not described herein again.

The terminal device 3000 shown in FIG. 23 can implement processes related to the terminal device in the method embodiments shown in FIG. 6 to FIG. 9 or FIG. 11 to FIG. 20. Operations and/or functions of the modules in the terminal device 3000 are intended to separately implement corresponding procedures in the foregoing method embodiments. For details, refer to the descriptions in the foregoing method embodiments. To avoid repetition, detailed descriptions are appropriately omitted herein.

The processor 3010 may be configured to perform an action that is implemented inside the terminal device and that is described in the foregoing method embodiments, and the processor 3010 corresponds to the processor 2220 in FIG. 22. The transceiver 3020 may be configured to perform an action that is of sending by the terminal device to the network device or receiving by the terminal device from the network device and that is described in the foregoing method embodiments, and the transceiver 3020 corresponds to the transceiver 2210 in FIG. 22. For details, refer to the descriptions in the foregoing method embodiments. Details are not described herein again.

Optionally, the terminal device 3000 may further include a power supply 3050, configured to supply power to various devices or circuits in the terminal device.

Besides, to enable functions of the terminal device to be more complete, the terminal device 3000 may further include one or more of an input unit 3060, a display unit 3070, an audio circuit 3080, a camera 3090, a sensor 3100, and the like. The audio circuit may further include a loudspeaker 3082, a microphone 3084, and the like.

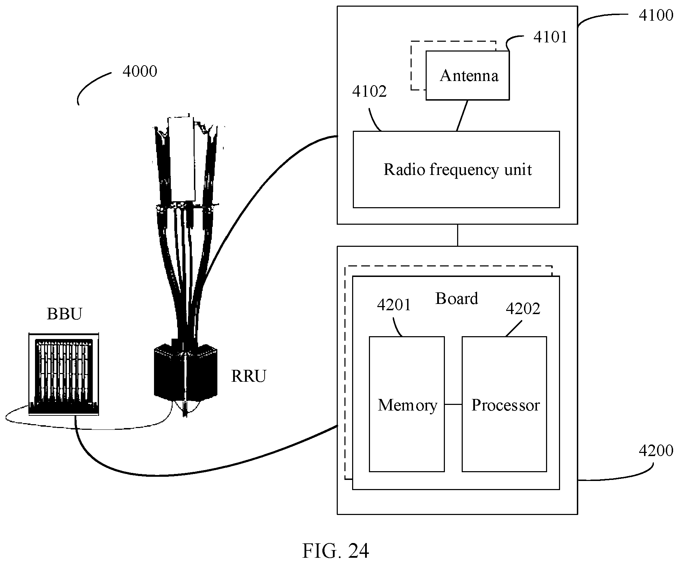

FIG. 24 is a schematic diagram of a structure of a network device according to an embodiment of this application. For example, FIG. 24 may be a schematic diagram of a structure of a network device. The network device 4000 may be applied to the system shown in FIG. 1, to perform a function of the network device in the foregoing method embodiments. As shown in the figure, the network device 4000 may include one or more radio frequency units such as a remote radio unit (remote radio unit, RRU) 4100 and one or more baseband units (BBUs) (which may also be referred to as distributed units (DUs)) 4200. The RRU 4100 may be referred to as a transceiver unit, and may correspond to the transceiver module 2110 in FIG. 21 or the transceiver 2210 in FIG. 22. Optionally, the RRU 4100 may also be referred to as a transceiver machine, a transceiver circuit, a transceiver, or the like, and may include at least one antenna 4101 and a radio frequency unit 4102. Optionally, the RRU 4100 may include a receiving unit and a sending unit. The receiving unit may correspond to a receiver (which is also referred to as a receiver machine or a receiver circuit). The sending unit may correspond to a transmitter (which is also referred to as a transmitter machine or a transmitter circuit). The RRU 4100 part is mainly configured to receive and transmit radio frequency signals and perform conversion between a radio frequency signal and a baseband signal, for example, configured to send indication information to a terminal device. The BBU 4200 is mainly configured to perform baseband processing, to control a network device, and so on. The RRU 4100 and the BBU 4200 may be physically disposed together, or may be physically separated, in other words, in a distributed network device.

The BBU 4200 is a control center of a network device, may also be referred to as a processing unit, may correspond to the processing module 2120 in FIG. 21 or the processor 2220 in FIG. 22, and is mainly configured to perform baseband processing functions such as channel encoding, multiplexing, modulation, and spectrum spreading. For example, the BBU (the processing unit) may be configured to control the network device to perform an operation procedure related to the network device in the foregoing method embodiments, for example, generating the indication information.

In an example, the BBU 4200 may include one or more boards. The plurality of boards may jointly support a radio access network (for example, an LTE network) that uses a single access standard, or may separately support radio access networks (for example, an LTE network, a 5G network, or another network) that use different access standards. The BBU 4200 further includes a memory 4201 and a processor 4202. The memory 4201 is configured to store necessary instructions and data. The processor 4202 is configured to control the network device to perform a necessary action, for example, is configured to control the network device to perform an operation procedure related to the network device in the foregoing method embodiments. The memory 4201 and the processor 4202 may serve one or more boards. In other words, a memory and a processor may be disposed on each board. Alternatively, a plurality of boards may share a same memory and a same processor. In addition, a necessary circuit may be disposed on each board.

It should be understood that the network device 4000 shown in FIG. 24 can implement processes of the network device in the method embodiments shown in FIG. 6 to FIG. 9 or FIG. 11 to FIG. 20. Operations and/or functions of the module in the network device 4000 are intended to separately implement corresponding procedures in the foregoing method embodiments. For details, refer to the descriptions in the foregoing method embodiments. To avoid repetition, detailed descriptions are appropriately omitted herein.

The BBU 4200 may be configured to perform an action that is implemented inside the network device and that is described in the foregoing method embodiments. The RRU 4100 may be configured to perform an action that is of sending to the terminal device by the network device or receiving from the terminal device by the network device and that is described in the foregoing method embodiments. For details, refer to the descriptions in the foregoing method embodiments. Details are not described herein again.

It should be understood that the network device 4000 shown in FIG. 24 is merely a possible structure of the network device, and should not constitute any limitation on this application. The method provided in this application is applicable to a network device in another form. For example, the network device includes an AAU, and may further include a CU and/or a DU; includes a BBU and an adaptive radio unit (adaptive radio unit, ARU); or includes a BBU. Alternatively, the network device may be customer premises equipment (customer premises equipment, CPE), or may be in another form. A specific form of the network device is not limited in this application.

The CU and/or the DU may be configured to perform an action that is implemented inside the network device and that is described in the foregoing method embodiments, and the AAU may be configured to perform an action that is of sending to the terminal device by the network device or receiving from the terminal device by the network device and that is described in the foregoing method embodiments. For details, refer to the descriptions in the foregoing method embodiments. Details are not described herein again.

An embodiment of this application further provides a computer-readable storage medium. The computer-readable storage medium stores a computer program for implementing the method performed by the network device or the method performed by the terminal device in the foregoing method embodiments, or computer instructions for implementing the method performed by the network device or the method performed by the terminal device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for convenience and brief description, for explanations and beneficial effect of related content in any communication apparatus provided above, refer to the corresponding method embodiment provided above. Details are not described herein again.

It should be understood that the processing apparatus may be one or more chips. For example, the processing apparatus may be a field programmable gate array (field programmable gate array, FPGA), an application specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, the steps in the foregoing methods may be completed by an integrated logic circuit in a form of hardware or instructions in a form of software in the processor. The steps of the methods disclosed with reference to embodiments of this application may be directly implemented by a hardware processor, or may be implemented by a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that the processor in embodiments of this application may be an integrated circuit chip and has a signal processing capability. In an implementation process, the steps in the foregoing method embodiments may be completed by an integrated logic circuit in a form of hardware or instructions in a form of software in the processor.

The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By using an example but not a restrictive description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the terminal device or the method performed by the network device in the embodiment shown in FIG. 4.

According to the methods provided in embodiments of this application, this application further provides a computer-readable storage medium. The computer-readable storage medium stores program code. When the program code is run on a computer, the computer is enabled to perform the method performed by the terminal device or the method performed by the network device in the embodiment shown in FIG. 4.

According to the methods provided in embodiments of this application, this application further provides a system. The system includes one or more terminal devices and one or more network devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application. For example, alternatively, the sending device and the receiving device may be both terminal devices or the like. Specific types of the sending device and the receiving device are not limited in this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, a computing device and an application that runs on a computing device may be both components. One or more components may reside within a process and/or a thread of execution, and a component may be located on a computer and/or distributed between two or more computers. In addition, these components may be executed from various computer-readable media that store various data structures. For example, the components may communicate by using a local and/or remote process based on a signal having one or more data packets (for example, data from two components interacting with another component in a local system, in a distributed system, and/or across a network such as the Internet interacting with another system by using a signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first indication information, wherein the first indication information corresponds to a first service group, the first service group comprises at least one first service, and the first service comprises a broadcast service and/or a multicast service; and
   determining, based on the first indication information, whether to monitor a physical downlink control channel PDCCH corresponding to the first service group.

2. The method according to claim 1, wherein the method further comprises:

   receiving first configuration information, wherein the first configuration information comprises a first information element, the first information element indicates a time domain position and/or a frequency domain position for monitoring a first message, and the first message comprises the first indication information; and
   receiving the first message based on the first configuration information.

3. The method according to claim 1 or 2, wherein the method further comprises:
   receiving the first configuration information, wherein the first configuration information comprises a second information element, and the second information element indicates a position of the first indication information in the first message.

4. The method according to claim 2, wherein

the time domain position comprises a start time domain position and a monitoring time period, and the monitoring time period indicates a time length for monitoring the first message; or

the time domain position comprises a start time domain position and an end time domain position; and

the first information element comprises a first offset, and the first offset is used to determine the start time domain position for monitoring.

5. The method according to claim 1, wherein the first indication information is comprised in a first message, the first message further comprises second indication information, the second indication information corresponds to a second service group, the second service group comprises at least one second service, the second service comprises at least one of a broadcast service, a multicast service, or a unicast service, and the second indication information is used to determine whether to monitor a PDCCH corresponding to the second service group.

6. The method according to any one of claims 2 to 5, wherein
the first message comprises physical downlink control information DCI, a media access control control element MAC CE, or a radio resource control RRC message.

7. A communication method, comprising:

obtaining first indication information, wherein the first indication information corresponds to a first service group, the first service group comprises at least one first service, and the first service comprises a broadcast service and/or a multicast service; and

sending the first indication information.

8. The method according to claim 7, wherein the method further comprises:

sending first configuration information, wherein the first configuration information comprises a first information element, the first information element indicates a time domain position and/or a frequency domain position at which a terminal device monitors a first message, and the first message comprises the first indication information; and

sending the first message based on the first configuration information.

9. The method according to claim 7 or 8, wherein the method further comprises:
sending the first configuration information, wherein the first configuration information comprises a second information element, and the second information element indicates a position of the first indication information in the first message.

10. The method according to claim 8, wherein

the time domain position comprises a start time domain position and a monitoring time period, and the monitoring time period indicates a time length for monitoring the first message; or

the time domain position comprises a start time domain position and an end time domain position; and

the first information element comprises a first offset, and the first offset is used to determine the start time domain position for monitoring.

11. The method according to claim 7, wherein the first indication information is comprised in a first message, the first message further comprises second indication information, the second indication information corresponds to a second service group, the second service group comprises at least one second service, the second service comprises at least one of a broadcast service, a multicast service, or a unicast service, and the second indication information is used to determine whether to monitor a PDCCH corresponding to the second service group.

12. The method according to any one of claims 8 to 11, wherein
the first message comprises physical downlink control information DCI, a media access control control element MAC CE, or a radio resource control RRC message.

13. A communication method, comprising:

receiving third indication information, wherein the third indication information indicates information about a third service group scheduled by using downlink control information DCI, the third service group comprises at least one third service, and the third service comprises a broadcast service and/or a multicast service; and

determining, based on the third indication information, whether to receive the third service group.

14. The method according to claim 13, wherein the method further comprises:

monitoring a physical downlink control channel PDCCH, and receiving the DCI on the PDCCH; and
the determining, based on the third indication information, whether to receive the third service group comprises:
determining, based on the third indication information, whether a resource scheduled by using the DCI carries
a transport block, wherein the transport block comprises data of the third service group.

15. The method according to claim 13, wherein the method further comprises: receiving fourth indication information,
wherein the fourth indication information indicates whether a physical downlink control channel PDCCH carries the
DCI for scheduling the third service group; and

determining, based on the fourth indication information, whether to monitor a PDCCH, and if it is determined to
monitor the PDCCH, receiving the DCI on the PDCCH; and
the determining, based on the third indication information, whether to receive the third service group comprises:
determining, based on the third indication information, whether to receive a transport block carried on a resource
scheduled by using the DCI, wherein the transport block comprises data of the third service group.

16. The method according to claim 13, wherein the determining, based on the third indication information, whether to
receive the third service group comprises:

determining, based on the third indication information, whether to monitor a physical downlink control channel
PDCCH; and
if it is determined to monitor the PDCCH, receiving the DCI on the PDCCH, and receiving a transport block
carried on a resource scheduled by using the DCI, wherein the transport block comprises data of the third
service group.

17. The method according to any one of claims 13 to 16, wherein the method further comprises:
receiving third configuration information, and receiving a third message based on the third configuration information,
wherein the third indication information is comprised in the third message, the third configuration information comprises a fifth information element and a sixth information element, the fifth information element indicates a time
domain position and/or a frequency domain position for monitoring the third message, and the sixth information
element indicates a position of the third indication information in the third message.

18. The method according to any one of claims 13 to 17, wherein the method further comprises:

receiving the transport block, wherein the transport block comprises one or more first data packets, and each
first data packet comprises a data packet of the at least one third service; and
when a third service corresponding to the first data packet is a service that a terminal device is not interested
in, discarding the first data packet, or discarding the transport block comprising the first data packet.

19. A communication method, comprising:

obtaining third indication information, wherein the third indication information indicates information about a third
service group scheduled by using downlink control information DCI, the third service group comprises at least
one third service, and the third service comprises a broadcast service and/or a multicast service; and
sending the third indication information.

20. The method according to claim 19, wherein the method further comprises:
sending fourth indication information, wherein the fourth indication information indicates whether a physical downlink
control channel PDCCH carries the DCI for scheduling the third service group.

21. The method according to claim 19, wherein the method further comprises:
sending third configuration information, and sending a third message based on the third configuration information,
wherein the third indication information is comprised in the third message, the third configuration information comprises a fifth information element and a sixth information element, the fifth information element indicates a time
domain position and/or a frequency domain position at which a terminal device monitors the third message, and the sixth information element indicates a position of the third indication information in the third message.

22. The method according to claim 20, wherein the method further comprises:

   sending fourth configuration information, wherein the fourth configuration information is used to receive a fourth message, and the fourth indication information is comprised in the fourth message; and
   the fourth configuration information comprises a seventh information element and an eighth information element, the seventh information element indicates a time domain position and/or a frequency domain position at which a terminal device monitors the fourth message, and the eighth information element indicates a position of the fourth indication information in the fourth message.

23. The method according to claim 19, wherein the method comprises:
   the third indication information comprises a session identifier or a group identifier of the third service.

24. The method according to claim 23, wherein the method further comprises:
   receiving assistance information from a core network device, wherein the assistance information indicates information about the at least one third service multiplexed into a same transport block, indicates information about the at least one third service with a same service attribute, or indicates an association relationship of a session of the at least one third service.

25. A communication apparatus, wherein the apparatus comprises a transceiver module and a processing module; the transceiver module is configured to receive first indication information, wherein the first indication information corresponds to a first service group, the first service group comprises at least one first service, and the first service comprises a broadcast service and/or a multicast service; and
   the processing module is configured to determine, based on the first indication information, whether to monitor a physical downlink control channel PDCCH corresponding to the first service group.

26. The apparatus according to claim 25, wherein the transceiver module is further configured to:

   receive first configuration information, wherein the first configuration information comprises a first information element, the first information element indicates a time domain position and/or a frequency domain position for monitoring a first message, and the first message comprises the first indication information; and
   receive the first message based on the first configuration information.

27. The apparatus according to claim 25 or 26, wherein the transceiver module is further configured to:
   receive the first configuration information, wherein the first configuration information comprises a second information element, and the second information element indicates a position of the first indication information in the first message.

28. The apparatus according to claim 26, wherein

   the time domain position comprises a start time domain position and a monitoring time period, and the monitoring time period indicates a time length for monitoring the first message; or
   the time domain position comprises a start time domain position and an end time domain position; and
   the first information element comprises a first offset, and the first offset is used to determine the start time domain position for monitoring the first message.

29. The apparatus according to claim 25, wherein the first indication information is comprised in a first message, the first message further comprises second indication information, the second indication information corresponds to a second service group, the second service group comprises at least one second service, the second service comprises at least one of a broadcast service, a multicast service, or a unicast service, and the second indication information is used to determine whether to monitor a PDCCH corresponding to the second service group.

30. The apparatus according to any one of claims 26 to 29, wherein
   the first message comprises physical downlink control information DCI, a media access control control element MAC CE, or a radio resource control RRC message.

31. A communication apparatus, wherein the apparatus comprises a processing module and a transceiver module;

the processing module is configured to obtain first indication information, wherein the first indication information corresponds to a first service group, the first service group comprises at least one first service, and the first service comprises a broadcast service and/or a multicast service; and

the transceiver module is configured to send the first indication information, wherein

**32.** The apparatus according to claim 31, wherein the transceiver module is further configured to:

send first configuration information, wherein the first configuration information comprises a first information element, the first information element indicates a time domain position and/or a frequency domain position at which a terminal device monitors a first message, and the first message comprises the first indication information; and

send the first message based on the first configuration information.

**33.** The apparatus according to claim 31 or 32, wherein the transceiver module is further configured to:
send the first configuration information, wherein the first configuration information comprises a second information element, and the second information element indicates a position of the first indication information in the first message.

**34.** The apparatus according to claim 32, wherein

the time domain position comprises a start time domain position and a monitoring time period, and the monitoring time period indicates a time length for monitoring the first message; or

the time domain position comprises a start time domain position and an end time domain position; and

the first information element comprises a first offset, and the first offset is used to determine the start time domain position for monitoring the first indication information.

**35.** The apparatus according to claim 31, wherein the first indication information is comprised in a first message, the first message further comprises second indication information, the second indication information corresponds to a second service group, the second service group comprises at least one second service, the second service comprises at least one of a broadcast service, a multicast service, or a unicast service, and the second indication information is used to determine whether to monitor a PDCCH corresponding to the second service group.

**36.** The apparatus according to any one of claims 32 to 35, wherein
the first message comprises physical downlink control information DCI, a media access control control element MAC CE, or a radio resource control RRC message.

**37.** A communication apparatus, wherein the apparatus comprises a transceiver module and a processing module;

the transceiver module is configured to receive third indication information, wherein the third indication information indicates information about a third service group scheduled by using downlink control information DCI, the third service group comprises at least one third service, and the third service comprises a broadcast service and/or a multicast service; and

the processing module is configured to determine, based on the third indication information, whether to receive the third service group.

**38.** The apparatus according to claim 37, wherein

the processing module is further configured to monitor a physical downlink control channel PDCCH, and the transceiver module is further configured to receive the DCI on the PDCCH; and

the processing module is configured to determine, based on the third indication information, whether to receive the third service group, and is specifically configured to determine, based on the third indication information, whether to receive a transport block carried on a resource scheduled by using the DCI, wherein the transport block comprises data of the third service group.

**39.** The apparatus according to claim 37, wherein

the transceiver module is further configured to receive fourth indication information, wherein the fourth indication information indicates whether a physical downlink control channel PDCCH carries the DCI for scheduling the third service group;

the processing module is further configured to determine, based on the fourth indication information, whether to monitor a PDCCH, and if it is determined to monitor the PDCCH, the transceiver module receives the DCI on the PDCCH; and

the processing module is configured to determine, based on the third indication information, whether to receive the third service group, and is specifically configured to determine, based on the third indication information, whether to receive a transport block carried on a resource scheduled by using the DCI, wherein the transport block comprises data of the third service group.

**40.** The apparatus according to claim 37, wherein the processing module is configured to determine, based on the third indication information, whether to receive the third service group, and is specifically configured to:

determine, based on the third indication information, whether to monitor a physical downlink control channel PDCCH; and

if it is determined to monitor the PDCCH, the transceiver module receives the DCI on the PDCCH, and receives a transport block carried on a resource scheduled by using the DCI, wherein the transport block comprises data of the third service group.

**41.** The apparatus according to any one of claims 37 to 40, wherein the transceiver module is further configured to: receive third configuration information, and receive a third message based on the third configuration information, wherein the third indication information is comprised in the third message, the third configuration information comprises a fifth information element and a sixth information element, the fifth information element indicates a time domain position and/or a frequency domain position for monitoring the third message, and the sixth information element indicates a position of the third indication information in the third message.

**42.** The apparatus according to any one of claims 37 to 41, wherein the transceiver module is further configured to:

receive the transport block, wherein the transport block comprises one or more first data packets, and each first data packet comprises a data packet of the at least one third service; and

when a third service corresponding to the first data packet is a service that a terminal device is not interested in, the processing module is further configured to discard the first data packet, or discard the transport block comprising the first data packet.

**43.** A communication apparatus, wherein the apparatus comprises a processing module and a transceiver module;

the processing module is configured to obtain third indication information, wherein the third indication information indicates a third service group scheduled by using downlink control information DCI, the third service group comprises at least one third service, and the third service comprises a broadcast service and/or a multicast service; and

the transceiver module is configured to send the third indication information.

**44.** The apparatus according to claim 43, wherein the transceiver module is further configured to: send fourth indication information, wherein the fourth indication information indicates whether a physical downlink control channel PDCCH carries the DCI for scheduling the third service group.

**45.** The apparatus according to claim 43, wherein the transceiver module is further configured to: send third configuration information, and send a third message based on the third configuration information, wherein the third indication information is comprised in the third message, the third configuration information comprises a fifth information element and a sixth information element, the fifth information element indicates a time domain position and/or a frequency domain position at which a terminal device monitors the third message, and the sixth information element indicates a position of the third indication information in the third message.

**46.** The apparatus according to claim 44, wherein

the transceiver module is further configured to send fourth configuration information, wherein the fourth configuration information is used to receive the fourth message, and the fourth message is used by a terminal device to determine whether to monitor a physical downlink control channel PDCCH; and

the fourth configuration information comprises a seventh information element and an eighth information element, the seventh information element indicates a time domain position and/or a frequency domain position at which the terminal device monitors the fourth message, and the eighth information element indicates a position of the fourth indication information in the fourth message.

**47.** The apparatus according to claim 43, wherein
the third indication information comprises a session identifier or a group identifier of the third service.

**48.** The apparatus according to claim 47, wherein the transceiver module is further configured to:
receive assistance information from a core network device, wherein the assistance information indicates information about the at least one third service multiplexed into a same transport block, indicates information about the at least one third service with a same service attribute, or indicates an association relationship of a session of the at least one third service.

**49.** A communication apparatus, comprising at least one processor and a memory, wherein the memory stores instructions, and when the instructions are run on a computer, the computer is enabled to perform the method according to any one of claims 1 to 6 or the method according to any one of claims 13 to 18.

**50.** A communication apparatus, comprising at least one processor and a memory, wherein the memory stores instructions, and when the instructions are run on a computer, the computer is enabled to perform the method according to any one of claims 7 to 12 or the method according to any one of claims 19 to 24.

**51.** A computer-readable storage medium, comprising a computer program, wherein when the computer program is run on a computer, the computer is enabled to perform the method according to any one of claims 1 to 6 or the method according to any one of claims 13 to 18.

**52.** A computer-readable storage medium, comprising a computer program, wherein when the computer program is run on a computer, the computer is enabled to perform the method according to any one of claims 7 to 12 or the method according to any one of claims 19 to 24.

FIG. 1

FIG. 2

FIG. 3

S410: Obtain first indication information

S420: First indication information

S430: Determine, based on the first indication information, whether to monitor a PDCCH corresponding to a first service group

FIG. 4

FIG. 5

EP 4 319 385 A1

WUS indication information

DCI format 2_6

0

Monitoring window

Power saving offset

A terminal device keeps in a sleep state

On-duration timer running time

DRX-on state duration

DRX-off state duration

DRX cycle

t0

t

(a)

WUS indication information

DCI format 2_6

1

Monitoring window

Power saving offset

A terminal device keeps in an awake state

On-duration timer running time

DRX-on state duration

DRX-off state duration

DRX cycle

t0

t

(b)

FIG. 6

```
┌─────────────────┐                    ┌─────────────────┐
│ Network device  │                    │ Terminal device │
└─────────────────┘                    └─────────────────┘
```

S701: Obtain first configuration information

S702: Obtain first indication information

S703: First configuration information ⟶

S704: First indication information ⟶

S705: Determine, based on the first indication information, whether to monitor a PDCCH corresponding to a first service group

FIG. 7

FIG. 8

FIG. 9

FIG. 10

```
┌─────────────────────┐                    ┌─────────────────────┐
│   Network device    │                    │   Terminal device   │
└──────────┬──────────┘                    └──────────┬──────────┘
           │                                          │
┌──────────┴─────────────────────────────┐           │
│ S1101: Obtain third indication information│          │
└──────────┬─────────────────────────────┘           │
           │                                          │
           │── S1102: Third indication information ──▶│
           │                                          │
           │           ┌──────────────────────────────┴──────────────┐
           │           │ S1103: Determine, based on the third          │
           │           │ indication information, whether to receive    │
           │           │ a third service group                         │
           │           └──────────────────────────────┬──────────────┘
           │                                          │
```

FIG. 11

| Core network device | | Network device | | Terminal device | |
|---|---|---|---|---|---|

S1201: Assistance information

S1202: Obtain third configuration information and third indication information

S1203: Third configuration information

S1204: Third indication information

S1205: Determine, based on the third indication information, whether to receive at least one MBS

S1206: Transport block

S1207: Determine whether to discard a first data packet

S1208: HARQ feedback information

FIG. 12

| Block #1 | Block #2 | Block #3 | Block #4 | Block #5 | Block #6 | Block #7 |
|---|---|---|---|---|---|---|

MBS 1    MBS 2 and MBS 3    MBS 4, MBS 5, MBS 6, and MBS 7    MBS 8

FIG. 13

(a)

(b)

PDCCH

PDSCH

FIG. 14

Determine to
monitor a PDCCH

1501

Determine
whether a resource scheduled
by using DCI carries a transport block
including data of a service
of interest

1502

No — Do not receive a
PDSCH

1504

Yes

Receive a PDSCH

1503

FIG. 15

```
┌──────────┐              ┌──────────┐                      ┌──────────┐
│   Core   │              │ Network  │                      │ Terminal │
│ network  │              │  device  │                      │  device  │
│  device  │              └──────────┘                      └──────────┘
└──────────┘                    │                                 │
      │  S1601: Assistance      │                                 │
      │- - - - - - - - - - - - ▶│                                 │
      │      information        │                                 │
      │         ┌───────────────┴───────────────────┐             │
      │         │ S1602: Obtain third configuration │             │
      │         │  information, fourth configuration│             │
      │         │ information, third indication     │             │
      │         │ information,                      │             │
      │         │ and fourth indication information │             │
      │         └───────────────┬───────────────────┘             │
      │                         │  S1603: Fourth                  │
      │                         │──────────────────────────────▶ │
      │                         │  configuration information      │
      │                         │  S1604: Fourth                  │
      │                         │──────────────────────────────▶ │
      │                         │  indication information         │
      │                         │           ┌─────────────────────┴──────┐
      │                         │           │ S1605: Determine, based on │
      │                         │           │ a fourth message, whether  │
      │                         │           │ to monitor a PDCCH         │
      │                         │           └─────────────────────┬──────┘
      │                         │  S1606: Third                   │
      │                         │──────────────────────────────▶ │
      │                         │  configuration information      │
      │                         │  S1607: Third                   │
      │                         │──────────────────────────────▶ │
      │                         │  indication information         │
      │                         │           ┌─────────────────────┴──────┐
      │                         │           │ S1608: Determine, based on │
      │                         │           │ the third indication       │
      │                         │           │ information, whether to    │
      │                         │           │ receive at least one MBS   │
      │                         │           └─────────────────────┬──────┘
      │                         │ S1609: Transport block          │
      │                         │- - - - - - - - - - - - - - - -▶ │
      │                         │           ┌─────────────────────┴──────┐
      │                         │           │ S1610: Determine whether   │
      │                         │           │ to discard a first data    │
      │                         │           │ packet                     │
      │                         │           └─────────────────────┬──────┘
      │                         │  S1611: HARQ                    │
      │                         │◀──────────────────────────────│
      │                         │  feedback information           │
      │                         │                                 │
```

FIG. 16

FIG. 17

1801 — Obtain a fourth message

1802 — Determine, based on fourth indication information, whether a PDCCH carries DCI for scheduling an MBS → No → Do not monitor the PDCCH — 1804

Yes

1803 — Monitor the PDCCH and receive the DCI

1805 — Determine whether a resource scheduled by using the DCI carries a transport block including data of a service of interest → No → Do not receive a PDSCH — 1807

Yes

1806 — Receive a PDSCH

FIG. 18

(a)

(b)

PDCCH

Physical signal

PDSCH

FIG. 19

2001 — Obtain a fourth message

2002 — Determine, based third indication information, whether to monitor a PDCCH, and determine whether a resource scheduled by using DCI carries a transport block including data of a service of interest

No → 2004 — Do not monitor the PDCCH

Yes

2003 — Monitor the PDCCH and receive a PDSCH

FIG. 20

Communication apparatus 2100

Transceiver module 2110

Processing module 2120

FIG. 21

Communication apparatus 2200

| Transceiver 2210 | Processor 2220 | Memory 2230 |

FIG. 22

3040

3000

3020 Transceiver

3050 Power supply

3010 Processor

3080 Audio circuit

Speaker 3082

Microphone 3084

3030 Memory

3090 Camera

3100 Sensor

3060 Input unit

3070 Display unit

FIG. 23

4000

4100

4101

Antenna

4102

Radio frequency unit

Board

4201

4202

Memory | Processor

4200

BBU

RRU

FIG. 24

<div align="center">

**INTERNATIONAL SEARCH REPORT**

</div>

| | |
|---|---|
| | International application No. |
| | **PCT/CN2021/098281** |

| | |
|---|---|
| **A.** | **CLASSIFICATION OF SUBJECT MATTER** |
| | H04W 72/04(2009.01)i |
| | According to International Patent Classification (IPC) or to both national classification and IPC |

| **B.** | **FIELDS SEARCHED** |
|---|---|
| Minimum documentation searched (classification system followed by classification symbols) |
| | H04W |
| Documentation searched other than minimum documentation to the extent that such documents are included in the fields searched |
| Electronic data base consulted during the international search (name of data base and, where practicable, search terms used) |
| | CNABS; CNTXT; CNKI; VEN; WOTXT; USTXT; EPTXT; 3GPP: 广播, 组播, 多播, 指示, 检测, 监测, 监听, 业务, 服务, 物理下行控制信道, 配置, 控制, 节电, 能量, 功率, 节省, MBS, MBMS, broadcast, indicate, detect, monitor, service, PDCCH, configure, control, power, save, DCI, MAC CE, RRC |

| **C.** | **DOCUMENTS CONSIDERED TO BE RELEVANT** | |
|---|---|---|
| Category* | Citation of document, with indication, where appropriate, of the relevant passages | Relevant to claim No. |
| X | US 2020389874 A1 (SAMSUNG ELECTRONICS CO., LTD.) 10 December 2020 (2020-12-10) <br> description, paragraphs [0043]-[0498] | 1-52 |
| X | VIVO. "Discussion on Mechanisms to Support Group Scheduling for RRC_CONNECTED UEs" <br> *3GPP TSG RAN WG1 #103-e R1-2007691*, 01 November 2020 (2020-11-01), <br> text, sections 2 and 3 | 1-52 |
| A | CN 105992376 A (ZTE CORP.) 05 October 2016 (2016-10-05) <br> entire document | 1-52 |
| A | NOKIA et al. "Correction on PUSCH and PDSCH Scheduling with CSS" <br> *3GPP TSG-RAN WG1 Meeting #100bis R1-2002767*, 24 April 2020 (2020-04-24), <br> entire document | 1-52 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2022** | **10 February 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| US | 2020389874 | A1 | 10 December 2020 | KR | 20200140745 | A | 16 December 2020 |
| | | | | WO | 2020246858 | A1 | 10 December 2020 |
| | | | | EP | 3912302 | A1 | 24 November 2021 |
| CN | 105992376 | A | 05 October 2016 | EP | 3244644 | A1 | 15 November 2017 |
| | | | | EP | 3244644 | A4 | 31 January 2018 |
| | | | | EP | 3244644 | B1 | 07 October 2020 |
| | | | | US | 2018027578 | A1 | 25 January 2018 |
| | | | | US | 10194454 | B2 | 29 January 2019 |
| | | | | WO | 2016127626 | A1 | 18 August 2016 |
| | | | | CN | 105992376 | B | 22 January 2019 |

International application No.

**PCT/CN2021/098281**

Form PCT/ISA/210 (patent family annex) (January 2015)